# EUROPÄISCHE PATENTSCHRIFT

(11) **EP 4 167 407 B1**
(45) Veröffentlichungstag und Bekanntmachung des Hinweises auf die Patenterteilung: **06.08.2025**
(21) Anmeldenummer: 22190353.7
(22) Anmeldetag: 15.08.2022
(51) Int. Cl.: H02G 1/04

(54) **GIRLANDENROLLE UND FREILEITUNGSHILFSTRAGSYSTEM ZUR VERWENDUNG IM FREILEITUNGSBAU**
GARLANDROLLER AND OVERHEAD LINE SUPPORT SYSTEM FOR USE IN OVERHEAD LINE CONSTRUCTION
ROULEAU DE GUIRLANDE ET SYSTÈME DE SUPPORT DE LIGNE AÉRIENNE POUR UTILISATION DANS LA CONSTRUCTION DE LIGNE AÉRIENNE

(30) Priorität: 15.10.2021 DE 102021126856
(43) Veröffentlichungstag der Anmeldung: 19.04.2023
(73) Patentinhaber: Omexom Hochspannung GmbH, 29664 Walsrode (DE)
(72) Erfinder: Seifert, Markus, 26135 Oldenburg (DE)
(74) Vertreter: Gulde & Partner

(56) Entgegenhaltungen:
- EP-A2- 3 599 685
- AU-A4- 2016 101 554
- US-B1- 6 540 207

## Beschreibung

### TECHNISCHES GEBIET

Die Erfindung betrifft Systeme und Vorrichtungen zur Verwendung im Freileitungsbau. Insbesondere betrifft die Erfindung einen neuartigen Rollenblock (im Folgenden Girlandenrolle genannt) für die Bereitstellung eines Freileitungshilfstragsystems zum sicheren Austausch eines Leiterseils. Ein Leiterseil kann auch als Leitung oder Freileitung und etwa als Hochspannungsfreileitung bezeichnet sein.

### TECHNOLOGISCHER HINTERGRUND

Der Austausch von Freileitungen ist in mehrfacher Hinsicht ein bedeutendes Unterfangen, aber besonders im Zusammenhang mit Hochspannungsfreileitungen, da die unter diesen Leitungen liegende oder kreuzende Infrastruktur durch unzulässige Annäherung oder Havarien (Leiterseilriss) beschädigt werden könnte und damit verbundene Gesundheits- und Sicherheitsrisiken bestehen.

Für diese Aufgabe sind Seilzugsicherungssysteme bekannt, bei denen eine Reihe von Girlandenrollen zwischen zwei Masten an das vorhandene Leiterseil gehängt und von einem Roboter (im Folgenden Seillaufkatze genannt), der ein Hilfs- bzw. Tragseil zieht, an dem die Girlandenrollen befestigt sind, entlang des Leiterseils ausgefahren werden. Das Tragseil wird anschließend so gespannt, dass die Girlandenrollen umkippen und die Last des vorhandenen Leiterseils aufnehmen. Das vorhandene Leiterseil wird dann durch die Girlandenrollen gezogen, wobei an ein anderes Leiterseil, das das vorhandene Leiterseil ersetzen soll, mit geeignetem Equipment verbunden (beispielswiese Ziehstrümpfe und Wirbelverbinder) hinterher durchgezogen wird.

Bestehende Girlandenrollen, die für diesen Zweck vorgesehen sind, erfordern die Handhabung von Befestigungselementen wie Muttern, um verschiedene Vorgänge auszuführen, um (a) den Block am Tragseil zu befestigen und (b) das vorhandene Leiterseil in dem Block gesichert zu führen. Relevanter Stand der Technik wird in den folgenden Dokumenten offenbart: AU 2016 101 554 A4, US 6 540 207 B1, EP 3 599 685 A2. Freileitungsarbeiter müssen in der Regel von Hängeleitern aus, die am Mast selbst aufgehängt sind, oder vergleichbaren Zwangslagen, arbeiten. In Kombination mit der relativ sperrigen Sicherheitskleidung und den in solchen Arbeitspositionen erforderlichen Gurten ist die Beweglichkeit, Reichweite und Geschicklichkeit des Arbeiters eingeschränkt. Die Konstruktion der vorhandenen Girlandenrollen trägt diesen Arbeitsbedingungen nicht Rechnung - sowohl hinsichtlich der Benutzerfreundlichkeit (und damit der Effizienz), als auch hinsichtlich des Risikomanagements.

Zwar werden Sicherheitsprotokolle in der Regel eingeführt, um den Zugang zu einem Gefahrenbereich unterhalb der Arbeitsposition zu beschränken. Jedoch besteht nach wie vor ein Verletzungsrisiko für das Personal, wenn die Girlandenrolle (oder Teile davon) herunterfällt - ebenso wie die Möglichkeit einer Beschädigung der Girlandenrolle oder anderer Geräte, wenn diese aus der Höhe fällt. Ferner ist der Zeitverlust bei der Bergung der heruntergefallenen Geräte der Effizient abträglich.

Darüber hinaus ist die bestehende Konstruktion der Girlandenrollen so ausgelegt, dass es während der Installation Fälle gibt, in denen eine Girlandenrolle nur durch den Griff des Arbeiters gehalten wird - was wiederum dazu führt, dass die Blöcke aus der Höhe fallen können.

Selbst wenn keine Fehler gemacht werden, kann die Verbesserung der Benutzerfreundlichkeit in solch gefährlichen Arbeitsumgebungen dazu beitragen, den Stress und die Ermüdung der Arbeiter zu verringern - was wiederum das Wohlbefinden des Arbeiters verbessert und die Wahrscheinlichkeit einer besseren Entscheidungsfindung oder eines effizienteren Einsatzes der Arbeiter erhöht.

Überdies sorgt ein, verglichen mit bislang auf dem Markt verfügbaren Girlandenrollen, signifikant geringeres Gewicht für einen verringerte Belastung der oftmals schon altersbedingt geschwächten vorhandenen und zu auszutauschenden Leiterseile, was die Sicherheit der Arbeiten weiter erhöht.

### DARSTELLUNG DER ERFINDUNG

Es ist eine Aufgabe der vorliegenden Erfindung, die vorgenannten Probleme zu lösen oder zumindest der Öffentlichkeit eine nützliche Wahl zu ermöglichen.

Diese Aufgabe wird gelöst durch einen Girlandenrolle, die aufweist:
einem Körper mit einem Inneren und einem Äußeren, und mit einer Öffnung zwischen dem Inneren und dem Äußeren;
einer Hauptsperre, die zwischen einer geschlossenen Stellung, in der die Öffnung blockiert wird, und einer offenen Stellung, in der der Durchgang vom Äußeren zum Inneren durch die Öffnung möglich ist, beweglich ist; und
einer im Inneren des Körpers positionierte Seillaufrolle, wobei die Girlandenrolle eine erste Teilseilrolle aufweist, die sich vom Körper in das Innere erstreckt, wobei die erste Teilseilrolle zwischen der Kabelrolle und einem von der Kabelrolle beabstandeten Ende des Körpers angeordnet ist, und wobei die Girlandenrolle eine zweite Teilseilrolle aufweist, die sich in der geschlossenen Position der Hauptsperre in Richtung auf die erste Teilseilrolle erstreckt.

Die Seillaufrolle kann auch als Seilrolle bezeichnet sein.

Darüber hinaus wird die Aufgabe gelöst durch ein Freileitungshilfstragsystem gelöst, das aufweist:
eine Mehrzahl von erfindungsgemäßen Girlandenrollen; und
ein Tragseil zur Aufhängung zwischen zwei Tragkonstruktionen (beispielsweise den Arbeitsbereich begrenzende Freileitungsmasten), an denen die Girlandenrollen befestigt sind.

Ferner ist die Aufgabe durch ein Verfahren für den Einsatz eines Freileitungshilfstragsystems gelöst, wobei
bei dem Verfahren eine Vielzahl von erfindungsgemäßen Girlandenrollen an einem Tragseil befestigt werden oder sind.

Dadurch, dass die Hauptsperre die Öffnung in ihrer geschlossenen Stellung vorzugsweise federkraftgesichert blockiert, kann ein Seil, etwa das Leiterseil und/oder das Tragseil, dessen Ende für einen Monteur der Girlandenrolle nicht erreichbar ist, einfach in die Girlandenrolle eingelegt werden, wobei die Girlandenrolle durch die Hauptsperre gegen ein ungewolltes Lösen vom Seil gesichert ist, und wobei die Girlandenrolle aufgrund der Seilrolle einfach relativ zum Seil bewegbar ist. Die Girlandenrolle ist also besonders einfach und sicher an einem Seil, das eine Lücke (auch Spannfeld genannt) zwischen zwei Tragkonstruktionen überspannt, angebracht werden.

Die Lösung kann durch verschiedene, jeweils für sich vorteilhafte und, sofern nicht anders ausgeführt, beliebig miteinander kombinierbare Ausgestaltungen weiter verbessert werden. Auf diese Ausführungsformen und die mit ihnen verbundenen Vorteile ist im Folgenden eingegangen.

Gemäß einer Ausgestaltung der Girlandenrolle weist der Körper eine Rückseite mit einem ersten Ende und einem zweiten Ende, einen ersten seitlichen Arm, der sich von dem ersten Ende der Rückseite erstreckt, und einen zweiten seitlichen Arm, der sich von dem zweiten Ende der Rückseite erstreckt, auf, wobei die Öffnung zwischen freien Enden des ersten und des zweiten seitlichen Arms angeordnet ist.

Gemäß einer Ausgestaltung der Girlandenrolle ist der Körper aus einem elektrisch nichtleitenden, also isolierenden, Material hergestellt.

Gemäß einer Ausgestaltung der Girlandenrolle ist der Körper aus einem Kunststoffmaterial, einem Metall oder aus einem Druckgussmaterial hergestellt.

Gemäß einer Ausgestaltung der Girlandenrolle weist die Girlandenrolle mindestens einen Seilschutz zwischen dem Körper und einem Längsende der Seilrolle auf.

Gemäß einer Ausgestaltung der Girlandenrolle erstreckt sich der Seilschutz über einen Teil der Seilrolle.

Gemäß einer Ausgestaltung der Girlandenrolle weist der Seilschutz eine Oberfläche auf, die in mindestens einer Richtung ein im Wesentlichen kontinuierliches Profil mit der Seilrolle bildet.

Gemäß einer Ausgestaltung der Girlandenrolle befindet sich der Seilschutz auf einer Fläche des Körpers, die von einer Richtung, aus der ein vorhandenes Seil durch den Girlandenrolle gezogen wird, abgewandt ist.

Gemäß einer Ausgestaltung der Girlandenrolle sind die Öffnung und die Hauptsperre auf einer Seite des Körpers zwischen der Position der Seilrolle und einem von der Seilrolle beanstandeten Ende des Körpers angeordnet.

Gemäß einer Ausgestaltung der Girlandenrolle weist die Hauptsperre einen Schwenkarm auf, der um eine auf einer Seite der Öffnung angeordnete Drehachse schwenkbar ist. Die Drehachse kann im Wesentlichen parallel oder schräg und beispielsweise senkrecht zur Drehachse der Seilrolle verlaufend ausgerichtet sein. Ein Schwenkwinkel, um den der Schwenkarm um die Drehachse Schwenkbar ist, kann bis zu 45 °, 60 °, 75 ° oder 90 ° oder mehr als 90 ° und 105 °, 120 ° oder 135 ° betragen. Ein nicht zur Erfindung gehörender, der Hauptsperre gegenüberliegende Umlenkvorsprung kann einen Anschlag für den Schwenkhebel bereitstellen und den Schwenkwinkel vorgeben.

Gemäß einer Ausgestaltung der Girlandenrolle ist die Hauptsperre so konfiguriert, dass sie in das Innere des Körpers zu öffnen ist.

Gemäß einer Ausgestaltung der Girlandenrolle ist die Hauptsperre so konfiguriert, dass sie in der geschlossenen Position am Körper anliegt, um ein Öffnen nach außen zu verhindern. Gemäß einer Ausgestaltung weist die Girlandenrolle eine Lastübertragungseinrichtung auf, mit der eine mechanische Last über die Öffnung hinweg übertragbar ist, wenn die Hauptsperre die Öffnung blockiert. Beispielsweise weist die Lastübertragungseinrichtung ein Halteelement und ein Gegenhalteelement auf, wobei das Halteelement und das Gegenhalteelement miteinander wechselwirken und die Last aufeinander übertragen, wenn die Hauptsperre die Öffnung blockiert. Beispielsweise können das Halteelement und das Gegenhalteelement zumindest abschnittsweise komplementär zueinander ausgebildet sein und im geschlossenen Zustand der Hauptsperre ineinander eingreifen und somit im geschlossenen Zustand der Hauptsperre mechanische Lasten über die Öffnung hinweg übertragen. Zum Beispiel kann das Halteelement und/oder das Gegenhalteelement als ein Haltevorsprung ausgebildet sein. Das Halteelement oder das Gegenhalteelement kann als eine Halteaufnahme für den Haltevorsprung ausgebildet sein, die den Haltevorsprung in der geschlossenen Position der Hauptsperre zumindest teilweise aufnimmt. Sind das Halteelement und das Gegenhalteelement als ein Haltevorsprung ausgebildet, so können sich diese in der geschlossenen Position der Hauptsperre zumindest teilweise überlappen, also entlang der lichten Weite der Öffnung hintereinander angeordnet sein und aneinander anliegen.

Gemäß einer Ausgestaltung der Girlandenrolle ist die Hauptsperre in Richtung der geschlossenen Position vorgespannt.

Gemäß einer Ausgestaltung der Girlandenrolle weist die Girlandenrolle Mittel zur Positionierung eines Tragseils in Bezug auf den Körper auf.

Gemäß einer Ausgestaltung der Girlandenrolle befindet sich die Einrichtung zur Positionierung des Tragseils im Inneren des Körpers.

Gemäß einer Ausgestaltung der Girlandenrolle weist das Mittel zur Positionierung des Tragseils eine Aussparung auf, die sich zum Inneren des Körpers hin öffnet und die an einem Ende des Körpers angeordnet ist, das am weitesten von der Rolle entfernt angeordnet ist.

Gemäß einer Ausgestaltung der Girlandenrolle weist das Mittel zum Lokalisieren des Tragseils eine zweites Sperre auf, die zwischen einer Position, in der die die Aussparung vom Inneren blockiert, und einer Position, in der es die Aussparung zum Inneren freigegeben ist, bewegbar ist.

Gemäß einer Ausgestaltung der Girlandenrolle weist die Aussparung auf einer Seite einen Hohlraum zur Aufnahme der zweiten Sperre auf, wenn die zweite Sperre in der offenen Position angeordnet ist. Der Hohlraum kann auch als Einbuchtung bezeichnet werden.

Gemäß einer Ausgestaltung der Girlandenrolle ist die zweite Sperre in Richtung der Position vorgespannt ist, in sie die Aussparung blockiert.

Gemäß einer Ausgestaltung der Girlandenrolle befindet sich das Mittel zum Positionieren des Tragseils an einem Scheitelpunkt des Körperinneren.

Gemäß einer nicht zur Erfindung gehörenden Ausgestaltung der Girlandenrolle weist die Girlandenrolle einen Umlenkvorsprung, der sich vom Körper in das Innere erstreckt, auf. Gemäß einer nicht zur Erfindung gehörenden Ausgestaltung der Girlandenrolle ist der Umlenkvorsprung zwischen der Seilrolle und einem von der Seilrolle beabstandeten

Ende des Körpers angeordnet.

Gemäß einer nicht zur Erfindung gehörenden Ausgestaltung der Girlandenrolle ist eine der Seilrolle zugewandte Fläche des Umlenkvorsprungs von der Seilrolle zum beabstandeten Ende des Körpers hin schräg verlaufend angeordnet.

Gemäß einer nicht zur Erfindung gehörenden Ausgestaltung der Girlandenrolle ist eine der Seilrolle zugewandte Fläche des Umlenkvorsprungs konkav gekrümmt.

Gemäß einer nicht zur Erfindung gehörenden Ausgestaltung der Girlandenrolle ist die konkav gekrümmte Fläche des Umlenkvorsprungs so geformt, dass ihr Scheitelpunkt weg von der Hauptsperre seitlich vom Massenschwerpunkt der Girlandenrolle versetzt angeordnet ist.

Gemäß einer nicht zur Erfindung gehörenden Ausgestaltung der Girlandenrolle weist die Girlandenrolle einen zweiten Umlenkvorsprung auf, der sich in der geschlossenen Position der Hauptsperre in Richtung auf den anderen der Umlenkvorsprünge erstreckt.

Gemäß einer nicht zur Erfindung gehörenden Ausgestaltung der Girlandenrolle oder des Freileitungshilfstragsystems weist die Girlandenrolle eine Lücke zwischen den Umlenkvorsprüngen auf, die, wenn die Hauptsperre geschlossen ist, ausreicht, um ein Tragseil durch die Lücke zu bewegen. Beispielsweise beträgt eine Länge der Lücke weniger als 25 mm, weniger als 20 mm oder weniger als 16 mm. Beispielsweise beträgt eine Länge der Lücke mehr als 10 mm, mehr als 16 mm, mehr als 20 mm und zum Beispiel zwischen 10 mm und 25 mm und insbesondere 20 mm.

Gemäß einer Ausgestaltung der Girlandenrolle weist die Girlandenrolle ein Hilfsgewicht auf. Gemäß einer Ausgestaltung der Girlandenrolle ist das Hilfsgewicht auf der Seite des Körpers angeordnet, die mit der Öffnung versehen ist.

Gemäß einer Ausgestaltung der Girlandenrolle befindet sich das Hilfsgewicht in der Nähe des Endes des Körpers, an dem sich das Mittel zum Positionieren für das Tragseil befindet.

Gemäß einer Ausgestaltung der Girlandenrolle weist die Girlandenrolle eine Ummantelung für das Hilfsgewicht auf, die an der Außenseite des Körpers angeordnet ist.

Gemäß einer Ausgestaltung der Girlandenrolle ist das Hilfsgewicht so angeordnet und dimensioniert, dass es für einen definiert asymmetrischen Schwerpunkt sorgt, um das im Folgenden beschriebene Kippen der Girlandenrolle in eine gewünschte Richtung zu erzwingen.

Gemäß einer Ausgestaltung der Girlandenrolle weist die Girlandenrolle an der Außenseite des Körpers eine Öse auf, wobei die Öse an einem Ende des Körpers angeordnet ist, das näher an der Seilrolle als ein gegenüberliegendes Ende des Körpers vorgesehen ist.

Gemäß einer Ausgestaltung des Freileitungshilfstragsystems weist das Freileitungshilfstragsystem mindestens eine Fixiereinrichtung und beispielsweise eine Vielzahl von Fixiereinrichtungen für das Tragseil auf, die so konfiguriert sind, dass sie die relative Bewegung der Girlandenrollen entlang des Tragseils verhindern.

Gemäß einer Ausgestaltung des Freileitungshilfstragsystems weist das Freileitungshilfstragsystem ein Förderseil auf, das dazu ausgebildet ist, die Girlandenrollen in einer Arbeitsposition zu halten oder zu heben, in der sie an dem Tragseil befestigbar sind.

Gemäß einer Ausgestaltung des Freileitungshilfstragsystems weist das Förderseil ein Hauptseil und mehrere Nebenseile auf, wobei jedes Nebenseil an einem Ende an des Hauptseils befestigt und von den anderen Nebenseilen beabstandet ist.

Gemäß einer Ausgestaltung des Verfahrens werden die Girlandenrollen auf einem vorhandenen und womöglich auszutauschenden Leiterseil positioniert, wobei das vorhandene Leiterseil zwischen zwei Tragstrukturen aufgehängt ist; und das Tragseil entlang des vorhandenen Leiterseils von einer der Tragstrukturen zur anderen gezogen wird; und das Tragseil so gespannt wird, dass das vorhandene Leiterseil an den Girlandenrollen anliegt und im weiteren Verlauf die Girlandenrollen kippen, sodass das Tragseil eine lasttragende Funktion übernimmt.

Zum Anbringen der Girlandenrolle an ein Leiterseil, das eine lichte Weite zwischen zwei Tragkonstruktionen überspannt, kann der Girlandenrolle an das Leiterseil gehängt werden, indem das Leiterseil durch die Öffnung geführt und die Girlandenrolle dann an das sich durch das Innere erstreckende Leiterseil gehängt wird. Hängt der Girlandenrolle am Leiterseil, kann dieses an der Seilrolle anliegen. Bevor oder nachdem die Girlandenrolle an das Leiterseil gehängt wird, kann das Tragseil optional durch die Öffnung geführt werden. Das Tragseil kann zum Anbringen der Girlandenrolle mit dem Mittel zum Positionieren des Tragseils in Kontakt gebracht werden. Hierzu kann das Tragseil an der zweiten Sperre vorbei in die Aussparung eingesetzt werden. Die zweite Sperre kann in der geschlossenen Position verhindern, dass das Tragseil die Aussparung ungewollt in Richtung auf das Innere verlässt. Die Fixiervorrichtung kann am Tragseil angebracht werden, bevor, nachdem oder währen der Girlandenrolle angebracht wird. Mehrere Girlandenrollen können so am Leiterseil angebracht werden.

Mit den Girlandenrollen und optional einer zumindest eine der Girlandenrollen entlang des Leiterseil bewegenden Bewegungseinrichtung, beispielsweise ein Roboter wie etwa die Seillaufkatze, kann das Tragseil so von einer der Tragkonstruktionen zur anderen der Tragkonstruktionen bewegt werden.

Überspannt das Tragseil die Lücke zwischen den Tragkonstruktionen, kann das Tragseil beispielsweise an diesen befestigt und zwischen diesen verspannt werden. Im Folgenden wird das Leiterseil leicht entspannt und parallel das Tragseil bis zu einer festgelegten Zugkraft kontrolliert weiter verspannt, sodass die Girlandenrollen umkippen und die Seilrolle nicht mehr oberhalb, sondern unterhalb des Leiterseils angeordnet ist und dieses trägt. Das Leiterseil kontaktiert also wiederum die Seilrolle und kann einfach über diese bewegt und zum Beispiel von einer der Tragkonstruktionen zur anderen der Tragkonstruktionen gezogen werden, um es zu entfernen.

Soll ein anderes, Leiterseil zwischen den Tragkonstruktionen gespannt werden, kann am entfernenden Leiterseil ein Vorseil angebracht werden, das beim Entfernen des Leiterseils von einer der Tragkonstruktionen zur anderen der Tragkonstruktionen bewegt wird. An dem Vorseil kann das andere Leiterseil angebracht und über die Seilrollen von einer der Tragkonstruktionen zur anderen der Tragkonstruktionen bewegt und beispielsweise gezogen werden. Üblicherweise wird das andere Leiterseil am bisherigen Leiterseil angebracht, sodass das Bewegen des bisherigen Leiterseils das andere Leiterseil mitbewegt.

Zum Entfernen der wenigstens einen Girlandenrolle kann diese mithilfe des Tragseils von einer der Tragkonstruktionen zur anderen der Tragkonstruktionen bewegt und beispielsweise gezogen werden. Hierzu wird das Tragseil vorab entspann, sodass die wenigstens eine Girlandenrolle so umkippen kann, dass die Seilrolle nicht mehr unterhalb, sondern oberhalb des Leiterseils angeordnet ist. Somit kann die Girlandenrolle an dem Leiterseil hängen und die Seilrolle über das Leiterseil rollen.

Mit anderen Worten kann die Erfindung mit den folgenden Ausgestaltungen weiter verbessert werden.

Eine Girlandenrolle ist eine Vorrichtung, die an einem zwischen zwei Tragkonstruktionen aufgehängten Tragseil aufgehängt sein kann und dazu dient, ein Leiterseil zu tragen, etwa wenn dieses abgenommen oder ausgetauscht werden soll. Es ist vorgesehen, dass beispielhafte Ausführungsformen der hier beschriebenen Girlandenrolle eine besondere Anwendung für den Ersatz von Leiterseil, zum Beispiel Hochspannungs-Stromübertragungsleiterseile, finden können, die zwischen Tragkonstruktionen, beispielsweise Masten, aufgehängt sind.

Solche Freileitungsseile werden typischerweise aus einer Vielzahl von Litzen gebildet - wie zum Beispiel Aluminiumleiter Stahlverstärkt (ACSR), Vollaluminiumleiter (AAC) oder Vollaluminiumlegierungsleiter (AAAC). Während die Eigenschaften des Freileitungsseils je nach seiner Spezifikation variieren können, kann das Freileitungsseil zum Beispiel ein ACSR-"Chukar"-Leiter sein, der im Wesentlichen 3,092 kg/m mit einem Durchmesser von 40,7 mm hat.

In einer beispielhaften Ausführungsform kann das Tragseil und damit die Girlandenrollen von einem Zugroboter, etwa eine Seillaufkatze, entlang des vorhandenen Freileitungsseils eingesetzt werden. Zugroboter, Schlepper oder Seillaufkatzen, wie zum Beispiel der von der ZECK GmbH gelieferte Zugroboter mit der Modell-Nr. LKE 85 "Pulling Robot", sind in der Fachwelt dafür bekannt, dass sie beim Schleppen eines Stahlseils und daran befestigten Rollenblöcken eine Spannweite überfahren.

Als Tragseil kann jedes geeignete, in der Fachwelt bekannte Seil verwendet werden, zum Beispiel aber auch ein Faserseil aus ultrahochmolekularem Polyethylen (UHMwPE), wie es zum Zeitpunkt der Antragstellung von der Koninklijke DSM N.V. unter dem Markennamen Dyneema^{®} vertrieben wurde. Das Tragseil kann also aus Metall und/oder Kunststoff und als ein massives Seil oder als ein Litzen aus Metall und/oder Kunststoff aufweisendes Seil ausgebildet sein.

Nachdem das Tragseil (und die Girlandenrollen) entlang des vorhandenen Freileitungsseils geschleppt wurden, kann eine Spannvorrichtung (z.B. ein Bodenspanner) verwendet werden, um das Tragseil zu sichern und zu spannen. Wird das Tragseil gespannt, kann es sich über das vorhandene Freileitungsseil erheben, sodass es die Girlandenrollen aus ihrer Ruheposition in ihre Halteposition schwenkt, und die Girlandenrollen das Freileitungsseil halten, also das Gewicht des Freileitungsseils aufnehmen.

Das vorhandene Freileitungsseil kann dann durch die Girlandenrollen hindurch gezogen werden. Am Ende des vorhandenen Freileitungsseils kann ein Vorseil befestigt sein oder werden, um anschließend ein anderes Freileitungsseil durch die Girlandenrollen zu ziehen.

In einer beispielhaften Verkörperung kann der Körper der Girlandenrolle eine Rückseite mit einem ersten und einem zweiten Ende, einen ersten seitlichen Arm, der sich vom ersten Ende der Rückseite aus erstreckt, und einen zweiten seitlichen Arm, der sich vom zweiten Ende der Rückseite aus erstreckt, umfassen, wobei die Öffnung zwischen unverbundenen oder freien Enden des ersten und des zweiten seitlichen Arms angeordnet ist. Eine solche Konfiguration kann im Allgemeinen "C"-förmig sein, obwohl es zu würdigen ist, dass der Verweis auf eine solche Form nicht als Einschränkung in Bezug auf Krümmung oder Symmetrie gedacht ist. So kann die Öffnung außermittig, also näher an einem Längsende der Girlandenrolle als einem diesem gegenüberliegenden Längsende, angeordnet sein.

Es ist zu beachten, dass der Verweis auf das Innere des Körpers nicht bedeuten soll, dass darin befindliche Merkmale vollständig umschlossen sind. Vielmehr definiert das Innere einen Raum, durch den zumindest ein Seil, also das Leiterseil und/oder das Tragseil, verlaufen kann.

Die Beschreibung exemplarischer Ausführungsformen des Körpers und der damit verbundenen Merkmale erfolgt nun unter Bezugnahme auf Seiten, Enden und Flächen des Körpers.

In einer beispielhaften Ausführung kann der Körper aus einem elektrisch nichtleitfähigen oder isolierenden Material hergestellt sein. Es ist vorgesehen, dass die Girlandenrollen und das Freileitungshilfstragsystem in der Nähe von stromführenden Kabeln verwendet werden können - in diesem Fall kann in einem nicht angeschlossenen Kabel, auf dem die Girlandenrolle verwendet wird, ein Strom induziert wird. In einer solchen Umgebung kann es vorteilhaft sein, dass Vorrichtungen (wie die Girlandenrolle), die das Seil kontaktieren, nichtleitend sind, um die Wahrscheinlichkeit eines Lichtbogens oder Induktionsstroms durch die Vorrichtung zu verringern. Darüber hinaus kann das Risiko einer Koronaentladung in Hochspannungssystemen durch das Vorhandensein unregelmäßiger Formen oder scharfer Kanten verstärkt werden, sodass es vorteilhaft ist, wenn Geräte, die mit Leiterseilen in Kontakt stehen, nichtleitend sind.

In einer beispielhaften Verkörperung kann der Körper aus einem Kunststoffmaterial oder aus elektrisch isolierendem Druckgussmaterial hergestellt sein. Das Kunststoffmaterial kann zum Beispiel Polyamid-Nylon mit optionaler Glasfaserverstärkung sein. Es ist zu beachten, dass dies keine Einschränkung darstellen soll und dass jedes andere geeignete Material, das einem Fachmann bekannt ist, verwendet werden kann. In einer beispielhaften Ausführung kann der Körper als ein einheitliches Teil gefertigt und beispielsweise gedruckt, gegossen oder spanend und etwa gefräst hergestellt sein. Ein einheitliches Teil kann ein einstückig gefertigtes und/oder handhabbares Teil sein.

Es ist vorgesehen, dass solche Materialien zusätzlich zu den elektrischen Isoliereigenschaften geeigneter Materialien auch geeignete mechanische Eigenschaften in Bezug auf die Festigkeit aufweisen können, ohne die fragile Härte von Metallen wie Stahl zu besitzen. Bestehende Girlandenrollen aus Stahl können ein höheres Risiko darstellen, die Litzen des Leiterseils oder des Tragseils zu zerschneiden und zu beschädigen, wenn sie auf das Leiterseil oder das Tragseil fallen oder daran entlang gezogen werden.

In einer beispielhaften Ausführung kann die Girlandenrolle mindestens einen Seilschutz zwischen dem Körper und einem womöglich durch ein Längsende der Seilrolle gebildeten Flansch der Seilrolle enthalten. Es ist vorgesehen, dass dies die Wahrscheinlichkeit verringern kann, dass sich streuende Leiterstränge zwischen Seilrolle und Körper verklemmen. In einer beispielhaften Ausführung kann sich der Seilschutz über einen Teil der Seilrolle erstrecken. Der Seilschutz kann auch als Seilrollenschutz bezeichnet werden.

In einer beispielhaften Ausführung kann der Seilschutz eine Oberfläche umfassen, die mit der Seilrolle in mindestens einer Richtung ein im Wesentlichen kontinuierliches Profil bildet.

In einer beispielhaften Ausführung kann der Seilschutz an einer Seite des Körpers angebracht sein, die von dem Ende abgewandt ist, von dem aus das vorhandene Leiterseil durchgezogen werden soll.

In einer beispielhaften Ausführung befinden sich die Öffnung in das Innere des Körpers und die Hauptsperre an einer Seite oder einem Abschnitt der Seite des Körpers, die zwischen der Seilrolle und einem von der Seilrolle beabstandeten und womöglich am meisten beabstandeten distalen Ende des Körpers verläuft.

Die Hauptsperre kann jede geeignete Struktur zum selektiven Blockieren der Öffnung sein. Die Hauptsperre kann zum Beispiel ein Arm oder Schenkel sein, der sich um einen auf einer Seite der Öffnung angeordneten Verbindungspunkt relativ zum Körper bewegt. Der Verbindungspunkt kann beispielsweise ein Scharnier sein, das eine Schwenkbewegung der Hauptsperre relativ zum Körper ermöglicht.

In einer beispielhaften Ausführung kann die Hauptsperre in das Innere des Körpers bewegbar und beispielsweise schwenkbar sein. Dies kann die Installation der Girlandenrolle erleichtern, da die Girlandenrolle in einer einzigen Bewegung, möglicherweise einhändig, durch Schieben oder Ziehen effektiv auf das Leiterseil aufgesetzt werden kann.

In einer beispielhaften Ausführung kann die Hauptsperre in ihrer geschlossenen Stellung am Körper anliegen, um ein Öffnen nach außen aufgrund von inneren Kräften durch das Leiterseil oder das Tragseil zu verhindern. In ihrer geschlossenen Stellung kann die Hauptsperre also an einer ins Innere dies Körpers weisenden Seite des Körpers anliegen. Ein Anlageabschnitt des Körpers, an dem die Hauptsperre in ihrer geschlossenen Stellung anliegt, kann einen Anschlag für die Hauptsperre bereitstellen. Beispielsweise kann ein freies Ende der Hauptsperre in der geschlossenen Stellung der Hauptsperre am Körper anliegen. Dadurch kann die Wahrscheinlichkeit verringert sein, dass sich das Leiterseil und/oder das Tragseil während der Benutzung der Girlandenrolle aus dem Inneren bewegt - stattdessen muss ein Arbeiter die Hauptsperre manuell nach innen drücken, um die Blockierung der Öffnung durch die Hauptsperre zu beseitigen und das Leiterseil und/oder das Tragseil aus dem Inneren entfernen zu können.

Gemäß einer Ausgestaltung der Girlandenrolle ist die Hauptsperre ausgebildet, in ihrer geschlossenen Stellung die Öffnung lastabhängig zunehmend zu blockieren, wobei die Hauptsperre ausgebildet sein kann, lastabhängig in ihrer geschlossenen Stellung fixiert zu sein, um die Öffnung zu blockieren.

In einer beispielhaften Ausführung kann der Girlandenrolle eine Sperrklinke zwischen einem unverbundenen Ende der Hauptsperre und dem Körper in geschlossener Position enthalten, um den Ausgleich der Belastungskräfte durch die verwendete Körperseite zu unterstützen. Zum Beispiel kann die Sperrklinke einen Sperrvorsprung am Körper aufweisen, der von einer Sperrvertiefung an der Hauptsperre aufgenommen wird, oder umgekehrt.

Die Sperrklinke kann eine Rasteinrichtung sein und der Körper kann eine Gegenrasteinrichtung für die Rasteinrichtung aufweisen. Im geschlossenen Zustand der Hauptsperre können die Rasteinrichtung und die Gegenrasteinrichtung ineinander eingreifen und somit im geschlossenen Zustand der Hauptsperre mechanische Lasten über die Öffnung hinweg übertragen.

In einer beispielhaften Ausführung kann die Hauptsperre eine Verriegelungsvorrichtung aufweisen, die von einem Benutzer gelöst werden muss, bevor sich die Hauptsperre öffnen lässt.

In einer beispielhaften Verkörperung kann die Hauptsperre in einer in die geschlossene Stellung weisenden Richtung vorgespannt sein. Es ist vorgesehen, dass dies dazu beitragen kann, die Installation der Girlandenrolle mit einer reduzierten Anzahl von Arbeitsschritten zu ermöglichen, die der Arbeiter möglicherweise mit nur einer Hand ausführen muss. Wird die Hauptsperre aus Ihrer geschlossenen Stellung bewegt, etwa wenn das Leiterseil oder das Tragseil durch die Öffnung bewegt wird, kann die Hauptsperre nachdem das Leiterseil oder das Tragseil die Öffnung passiert hat, also selbsttätig in die geschlossene Stellung zurückkehren.

In einer beispielhaften Ausführung kann die Girlandenrolle eine Vorspannvorrichtung für die Hauptsperre aufweisen. Die Vorspannvorrichtung kann eine Feder, beispielsweise eine Torsionsfeder aufweisen, die gemeinsam mit dem Scharnier vorgesehen oder ausgebildet sein kann.

In einer beispielhaften Ausführung kann der Girlandenrolle Mittel zur Positionierung des Tragseils aufweisen, um das Tragseil relativ zum Körper zu positionieren.

In einer beispielhaften Ausführungsform kann das Mittel zur Positionierung des Tragseils im Inneren des Körpers angeordnet sein oder an das Innere angrenzen. Somit kann die Hauptsperre nicht nur dazu dienen, dass das Leiterseil, sondern auch das Tragseil ungewollt durch die Öffnung aus dem Inneren weg bewegt werden kann.

In einer beispielhaften Ausführung kann das Mittel zur Positionierung des Tragseils eine Aussparung aufweisen, wobei die Aussparung im Körper angeordnet und sich ins Innere des Körpers öffnen kann. Das Mittel zur Positionierung kann an einem Ende des Körpers angeordnet sein, dass weiter entfernt von der Seilrolle angeordnet ist, als ein gegenüberliegendes Ende des Körpers. Die Aussparung kann sich in Richtung auf die Seilrolle öffnen.

In einer beispielhaften Ausführung kann das Mittel zur Positionierung des Tragseils eine zweite Sperre aufweisen, die zwischen einer Position, in der die Aussparung vom Inneren her blockiert ist, und einer Position, in der die Aussparung zum Inneren hin geöffnet ist, beweglich ist. In einer beispielhaften Ausführung kann die zweite Sperre beispielsweise um einen Verbindungspunkt mit dem Körper schwenkbar sein. Die Aussparung kann auf einer Seite einen Hohlraum zur Aufnahme der zweiten Sperre aufweisen. In ihrer offenen Position, in der das Tragseil in die Aussparung bewegt werden kann, kann die zweite Sperre in dem Hohlraum angeordnet und beispielsweise in diesen geschwenkt sein.

In einer beispielhaften Ausführung kann die zweite Sperre in Richtung der Position, in der die Aussparung blockiert ist, vorgespannt sein. Die Position, in der die die zweite Sperre den Zugang vom Inneren zu der Aussparung blockiert, kann als geschlossenen Position bezeichnet werden. Wie im Falle der Hauptsperre kann vorgesehen sein, dass dies die Installation des Tragseils erleichtern kann - der Bediener kann die Hauptsperre manuell oder vorzugsweise mit dem Tragseil aus seiner Position, in der es die Öffnung verschließt, ins Innere schwenken und das Tragseil dabei ins Innere bewegen. Ferner kann der Bediener die zweite Sperre manuell oder vorzugsweise mit dem Tragseil aus der geschlossenen Position in die offene Position bewegen und dabei das Tragseil vorbei an der in der offenen Position angeordneten zweiten Sperre in die Aussparung bewegen.

In einer beispielhaften Ausführung kann sich das Mittel zur Positionierung des Tragseils an einem Scheitelpunkt des Körperinneren oder eines der Enden des Körpers befinden. Dabei kann eine an das Innere angrenzende Fläche des Körpers das Tragseil zum Mittel zur Positionierung führen.

In einer beispielhaften Ausführung kann eine Fixiervorrichtung für das Tragseil bereitgestellt sein, um eine relative Bewegung der Girlandenrolle entlang des Tragseils zu begrenzen. Dies kann dazu beitragen, sicherzustellen, dass, wenn mehrere Girlandenrollen am Tragseil angebracht sind, sich deren Abstände zueinander nicht ohne weiteres ändern können.

In einer beispielhaften Ausführung kann die Fixiervorrichtung aus einem oder mehreren Bauteilen bestehen, die von der Girlandenrolle getrennt sind. Die Bauteile können zum Beispiel Klemmen sein, die entlang des Tragseils vor und hinter dem Girlandenrolle am Tragseil positioniert oder positionierbar sind.

Die Fixiervorrichtung kann separat von der Girlandenrolle handhabbar bereitgestellt sein. Alternativ oder zusätzlich kann die Girlandenrolle eine oder die Fixiervorrichtung für das Tragseil aufweisen.

Die Fixiervorrichtung für das Tragseil kann zum Beispiel eine Pressfläche enthalten, die das Tragseil pressend kontaktiert, wenn die Fixiervorrichtung am Tragseil angebracht ist. Eine Presskraft, die zwischen der Pressfläche und dem Tragseil wirkt und ein Verschieben des Fixiervorrichtung entlang des Tragseils verhindert, kann durch in der Technik bekannte Mittel - etwa einen Verriegelungshebel oder eine Vorspanneinrichtung wie eine Feder - aufgebracht werden. Beispielsweise kann die Fixiervorrichtung mehrteilig ausgebildet sein, wobei die Teile oder Bauteile der Fixiervorrichtung von unterschiedlichen und beispielsweise einander gegenüberliegenden Seiten auf das Tragseil einwirken. Die Teile oder Bauteile können durch form-, kraft- und/oder materialschlüssige Befestigung aneinander befestigt sein. Die Befestigung kann die Presskraft aufbringen. Beispielsweise können die Bauteile kraftschlüssig miteinander verschraubt sein.

In einer nicht zur Erfindung gehörendenAusführung kann die Girlandenrolle einen Umlenkvorsprung aufweisen, der sich vom Körper ins Innere erstreckt. Der Umlenkvorsprung kann zwischen der Seilrolle und dem Mittel zur Positionierung des Tragseils angeordnet sein.

Im Gebrauch kann der Umlenkvorsprung bei gespanntem Tragseil dazu dienen, eine Fläche zu schaffen, an der das Leiterseil anliegen kann. Durch die Festlegung der Position, an der dies geschieht, ist vorgesehen, dass dies dazu beitragen kann, dass die Girlandenrolle über einen gewünschten Bewegungsbereich und in eine gewünschte Richtung stets vollständig geschwenkt werden oder umkippen kann.

In einer nicht zur Erfindung gehörenden Ausführung erstreckt sich der Umlenkvorsprung von einer Position zwischen der Seilrolle und dem von der Seilrolle am meisten entfernen (also distalen) Ende des Körpers. Bei Ausführungen, bei denen sich die Positionierungseinrichtung für das Tragseil im Inneren des Körpers am von der Seilrolle distalen Ende befindet, kann diese Position dazu beitragen, den Weg des Leiterseils im Inneren zu begrenzen, um das Schwenken oder Umkippen der Girlandenrolle zu unterstützen, während gleichzeitig ein gewünschter Abstand zwischen dem Tragseil und dem Leiterseil beibehalten wird.

In einer nicht zur Erfindung gehörenden Ausführung kann die der Seilrolle zugewandte Fläche des Umlenkvorsprungs von der Seilrolle zum distalen Ende des Körpers hin abgewinkelt sein. Insbesondere kann die der Seilrolle zugewandte Fläche des Umlenkvorsprungs konkav gekrümmt sein. Hierdurch kann das Schwenken oder Umkippen der Girlandenrolle als eine gleichmäßige Bewegung erfolgen.

In einer nicht zur Erfindung gehörenden Ausführung kann die Oberfläche des Umlenkvorsprungs so geformt sein, dass sein Scheitelpunkt seitlich vom Massenschwerpunkt der Girlandenrolle, weg von der Hauptsperre, versetzt angeordnet ist. Es ist vorgesehen, dass dies dazu beitragen kann, das Schwenken oder Umkippen der Girlandenrolle auf wiederholbare Weise zu unterstützen, sodass bei Verwendung mehrerer Girlandenrollen diese in die gleiche Richtung schwenken oder umkippen.

In einer nicht zur Erfindung gehörenden Ausführung kann die Girlandenrolle einen zweiten Umlenkvorsprung aufweisen, der sich in der geschlossenen Position der Hauptsperre von der Hauptsperre in Richtung auf den anderen Umlenkvorsprungs zu erstreckt. Der zweite Umlenkvorsprung kann mit dem anderen Umlenkvorsprung zusammenwirken, um die zuvor beschriebene Auflagefläche während des Schwenkens oder Umkippens zu bilden. Es ist zu beachten, dass, während der zweite Umlenkvorsprung mit Bezug auf den anderen Umlenkvorsprung beschrieben ist, die Girlandenrolle in einer beispielhaften Ausführung nur einen Umlenkvorsprung aufweist, der sich von der Hauptsperre aus erstreckt.

In einer nicht zur Erfindung gehörenden Ausführung kann die Oberfläche des zweiten Umlenkvorsprungs, die der Seilrolle zugewandt ist, auch zum distalen Ende des Körpers hin von der Seilrolle abgewinkelt sein, sich also von der Seilrolle weg erstrecken.

In einer nicht zur Erfindung gehörenden Ausführung weist die Girlandenrolle bei geschlossener Hauptsperre eine Lücke zwischen den Umlenkvorsprüngen auf. Die Lücke kann eine lichte Weite aufweisen, die geringer ist, als die lichte Weite der Öffnung. Alternativ oder zusätzlich kann die Lücke eine lichte Weite aufweisen, die einer lichten Weite der Aussparung im Wesentlichen entspricht. Die Lücke kann ausreichen, um das Tragseil durch die Lücke hindurch zu bewegen. Folglich kann die Hauptsperre genutzt werden, um das Leiterseil und das Tragseil durch die Öffnung ins Innere einzulegen und/oder aus dem Inneren zu entfernen. Weist das Tragseil einen geringeren Durchmesser als das Leiterseil auf, verhindert die Lücke jedoch, dass sich das Leiterseil von der Seilrolle aus gesehen hinter die Umlenkvorsprünge bewegt. Weist die Girlandenrolle nur einen Umlenkvorsprung auf, so kann die Lücke zwischen einem freien Ende des Umlenkvorsprungs und einem ans Innere angrenzenden Abschnitt des Körpers vorgesehen sein.

In einer beispielhaften Ausführung kann der Verbindungspunkt der Hauptsperre mit dem Körper auf der Seite der Öffnung distal von der Seilrolle liegen. Der Verbindungspunkt kann also an dem am weitesten von der Seilrolle entfernten Ende der Öffnung angeordnet sein. Folglich kann ein freies Ende der Hauptsperre, das dem Verbindungspunkt gegenüberliegt, im Wesentlichen zur Seilrolle weisen. Wird dieses freie Ende beim Einlegen des Leiterseil ins Innere bewegt und zum Beispiel geschwenkt, kann sich ein durchgängiges Einlegevolumen für das Leiterseil ergeben, dass sich von der Öffnung bis zur Seilrolle erstrecken kann. Das Einlegevolumen kann so ausgebildet sein, dass es sich im Wesentlichen gerade von der Öffnung zur Seilrolle erstreckt. Dies kann das Einlegen des Leiterseil ins Innere der Girlandenrolle vereinfachen.

Es kann vorgesehen sein, dass dies bei den Ausführungen einschließlich der Umlenkvorsprünge und der im Inneren des Körpers befindlichen Mittel zur Positionierung des Tragseils zur Erleichterung der Bedienung der Girlandenrolle beiträgt.

Erfindungsgemäß sind die Umlenkvorsprünge durch Teilseilrollen ersetzt. Die Teilseilrolle kann quer zu ihrer Rollenachse einen Rollendurchmesser aufweisen. Entlang der Rollenachse kann sich der Rollendurchmesser zumindest abschnittsweise verringern. Die Teilseilrolle kann ein freies Ende aufweisen, wobei sich der Rollendurchmesser auf das freie Ende zu verringern kann. Ist die Teilseilrolle am Körper angeordnet, kann deren freies Ende zur Hauptsperre weisen. Ist die Teilseilrolle an der Hauptsperre angeordnet, kann deren freies Ende zur Innenseite eines der Hauptsperre gegenüberliegenden Abschnitts des Körpers weisen. Erfindungsgemäß weist die Girlandenrolle anstelle der Umlenkvorsprünge zwei Teilseilrollen auf, wobei die Lücke zwischen den freien Enden der Teilseilrollen ausgebildet ist. Die beiden Teilseilrollen können so ausgebildet sein, dass deren Rollendurchmesser an deren freien Enden jeweils sein Minimum erreicht. Jeder der Teilseilrollen kann auch als Umlenkteilrolle bezeichnet werden. Wenn zwei Teilseilrollen vorgesehen sind, können deren frei Enden aufeinander zu weisen. Wenn zwei Teilseilrollen vorgesehen sind, können deren Rollenachsen miteinander fluchtend angeordnet sein.

Die Position zumindest einer der Teilseilrollen kann so gewählt sein und/oder deren quer zu ihrer Rollenachsen verlaufender Rollendurchmesser kann so bemessen sein, dass ein Abstand der Teilseilrolle zu der Seilrolle geringer ist als ein Durchmesser eines Leiterseils, auf das die Girlandenrolle aufsetzbar ist. Beispielsweise beträgt der Abstand weniger als 90 %, als 75 %, als 60 %, als 50 %, weniger also 40 %, weniger als 30 %, weniger als 20 % oder weniger als 10 % des Durchmessers des Leiterseils. Beispielsweise beträgt der Abstand weniger als 20 mm, weniger als 18 mm, weniger als 16 mm, weniger als 14 mm, weniger als 12 mm, weniger als 10 mm, weniger als 8 mm, weniger als 6 mm, weniger als 4 mm oder weniger als 2 mm.

Die Teilseilrolle und insbesondere deren Fuß kann die Seilrolle und insbesondere eines der Enden der Seilrolle sogar kontaktieren. Der Abstand kann also null oder nahezu null sein.

Insbesondere im Bereich eines dem freien Ende gegenüberliegenden Fußes der Teilseilrolle kann der Rollendurchmesser so bemessen sein, dass ein Abstand der Teilseilrolle zu der Seilrolle geringer ist als ein Durchmesser eines Leiterseils, auf das die Seilrolle aufsetzbar ist. Beispielsweise beträgt der Abstand weniger als 90 %, als 75 %, als 60 % oder weniger als 50 % des Durchmessers des Leiterseils. Beispielsweise beträgt der Abstand weniger als 20 mm, weniger als 18 mm, weniger als 16 mm, weniger als 14 mm, weniger als 12 mm, weniger als 10 mm, weniger als 8 mm, weniger als 6 mm, weniger als 4 mm oder weniger als 2 mm.

Die Teilseilrolle und insbesondere deren Fuß kann die Seilrolle und insbesondere eines der Enden der Seilrolle sogar kontaktieren. Der Abstand kann also null oder nahezu null sein.

Die der Hauptsperre gegenüberliegende Teilseilrolle kann einen Anschlag für den Schwenkhebel bereitstellen und den Schwenkwinkel vorgeben.

Die Länge der an der Hauptsperre angeordneten Teilseilrolle kann so bemessen sein, dass, wenn auf die Teilseilrolle ein Kraft in Richtung auf die zweite Sperre wirkt, ein resultierender Kraftvektor zwischen die Drehachse und das freie Ende des Schwenkarms weist.

Die Teilseilrollen können unterschiedlich lang ausgeformt sein.

Zumindest die der Hauptsperre gegenüberliegende Teilseilrolle kann so ausgeformt sein, dass eine von ihrem freien Ende weg weisende und zum Körper hin weisende Seite, die Teil des Fußes der Teilseilrolle sein kann, eine Krümmung eines Abschnitts des Körpers zwischen der Rollenachse der Teilseilrolle und der zweiten Sperre zumindest abschnittsweise nachformt.

In einer beispielhaften Ausführungsform kann die Girlandenrolle ein Gegen- oder Hilfsgewicht aufweisen. Das Gegengewicht kann so positioniert sein, dass es das Schwenken oder Umkippen der Girlandenrolle in eine gewünschte Richtung unterstützt - insbesondere während des Spannens des Tragseils, um das Gewicht des Leiterseils aufzunehmen. Das Gegengewicht an sich kann durch jedes geeignete, Mittel bereitgestellt werden - beispielsweise als eine feste Masse, die am Körper befestigt ist, sei es lösbar oder unlösbar.

In einer beispielhaften Ausführung kann das Gegengewicht in der Nähe des Körperendes angeordnet sein, an dem sich das Mittel zur Positionierung des Tragseils befindet.

In einer beispielhaften Ausführung kann sich das Gegengewicht auf der Seite des Körpers befinden, die die Öffnung ins Innere aufweist. Alternativ kann sich das Gegengewicht auf der Seite des Körpers befinden, die der Seite mit der Öffnung ins Innere gegenüber liegt. Hierdurch kann ein Schwenken oder Umkippen der Girlandenrolle in eine vorbestimmte Richtung begünstigt sein. Insbesondere wenn das Gegengewicht an der die Öffnung aufweisenden Seite des Körpers angeordnet ist, kann dies die Wahrscheinlichkeit verringert, dass das Leiterseil während des Schwenkens oder Umkippens auf die Hauptsperre aufschlägt oder stark an dieser anliegt, was die Wahrscheinlichkeit verringern kann, dass die Hauptsperre versagt und das Leiterseil ungewollt freigegeben wird.

Die Girlandenrolle kann eine Ummantelung für das Gegengewicht an der Außenseite des Körpers enthalten, um ein im Wesentlichen kontinuierliches Profil zu erhalten und die Wahrscheinlichkeit eines Verhakens zu verringern. Das im Wesentlichen kontinuierliche Profil kann ein Profil sein, das in seinem Verlauf keine Kanten, beispielsweise beim Übergang vom Körper der Girlandenrolle zum Gegengewicht, aufwiest.

Das Freileitungshilfstragsystems kann das Förderseil umfassen, die unter anderem dazu dienen kann, die Girlandenrolle in eine Arbeitsposition zu heben, in der sie am Tragseil und/oder am Leiterseil befestigt werden kann.

In einer beispielhaften Ausführungsform kann das Förderseil ein Hauptsein und eine Vielzahl von Nebenseilen umfassen. Jedes Nebenseil kann beabstandet von einem anderen der Nebenseile mit einem seiner Enden am Hauptseil befestigt werden. Eine Girlandenrolle kann am freien Ende einer oder mehrerer der Nebenseile befestigbar sein.

In einer beispielhaften Ausführung kann die Girlandenrolle an ihrer vom Inneren weg weisenden Außenseite ein Anbringelement zum Anbringen des freien Endes zumindest eines der Nebenseile aufwiesen. Beispielsweise kann das Anbringelement an der Außenseite des Endes des Körpers angebracht sein, das näher zur Seilrolle angeordnet ist, als das gegenüberliegende Ende des Körpers. Das Anbringelement kann als eine Öse ausgebildet sein. Beispielsweise kann ein Befestigungsmittel wie ein Karabinerhaken das Förderseil mit dem Anbringelement verbinden.

Die Nebenseile können bis zu 1,0 m, 1,5 m, 2,0 m oder bis zu 2,5 m lang sein und bieten dem Benutzer genügend Spielraum, um eine Girlandenrolle am Tragseil und/oder am Leiterseil zu befestigen. Ist die Girlandenrolle am Tragseil und/oder am Leiterseil befestigt, kann sie vom Förderseil gelöst werden. Hierdurch kann das Risiko, dass die Girlandenrolle während der Installation aus der Höhe fällt, verringert werden. Alternativ kann die Girlandenrolle auch zunächst vom Nebenseil gelöst und dann am Leiterseil oder das Tragseil angebracht werden.

### KURZBESCHREIBUNG DER ZEICHNUNGEN

Zum besseren Verständnis der vorliegenden Erfindung wird nachfolgend auf die Zeichnungen Bezug genommen. Diese zeigen lediglich Ausführungsbeispiele des Erfindungsgegenstands. Merkmale dieser Ausführungsbeispiele sind unabhängig voneinander kombinierbar.

In den Figuren und der dazugehörigen Beschreibung sind gleiche oder gleichwirkende Teile mit den gleichen Bezugszeichen versehen. Figuren 1A bis 4, beziehen sich auf Ausführungsbeispielen einer nicht zur Erfindung gehörenden Girlanderolle.
- Figur 1A: zeigt schematisch ein Ausführungsbeispiel einer Girlandenrolle in einer perspektivischen Ansicht;
- Figur 1B: zeigt ein weiteres Ausführungsbeispiel der Girlandenrolle;
- Figur 1C: zeigt eine vergrößerte Ansicht eines weiteren Ausführungsbeispiels der Girlandenrolle;
- Figur 1D: zeigt das Ausführungsbeispiel einer der vorherigen Figuren in einer Seitenansicht;
- Figur 1E: zeigt das Ausführungsbeispiel der Figur 1A in einer Aufsicht;
- Figur 2: zeigt das Ausführungsbeispiel der Figur 1A in einer weiteren Seitenansicht;
- Figur 3A-D: zeigen Girlandenrolle des in den bisherigen Figuren gezeigten Ausführungsbeispiels in verschiedenen Verwendungspositionen;
- Figur 4: zeigt das Ausführungsbeispiel der Figur 1A und ein beispielhaftes Förderseilsystem für den Transport der Girlandenrolle zu und von einer erhöhten Arbeitsposition;
- Figur 5A-L: zeigen beispielhaft eine mögliche Installation und Verwendung eines Freileitungshilfstragsystems mit einem Leiterseil;
- Figur 6: zeigt das Ausführungsbeispiel des Freileitungshilfstragsystems der Figuren 5A-L in einer Perspektivansicht, wobei das Leiterseil auf Seilrollen der am Tragseil hängenden Girlandenrollen aufliegt;
- Figur 7: zeigt das Ausführungsbeispiel des Freileitungshilfstragsystems der Figuren 5A-L in einer Seitenansicht, wobei die Seilrolle einer der Girlandenrollen auf dem Leiterseil aufliegt;
- Figur 8: zeigt ein Ausführungsbeispiel einer erfindungsgemäßen Fixiervorrichtung; und
- Figur 9: zeigt eines Ausführungsbeispiel einer erfindungsgemäßen Girlandenrolle.

### DETAILLIERTE BESCHREIBUNG

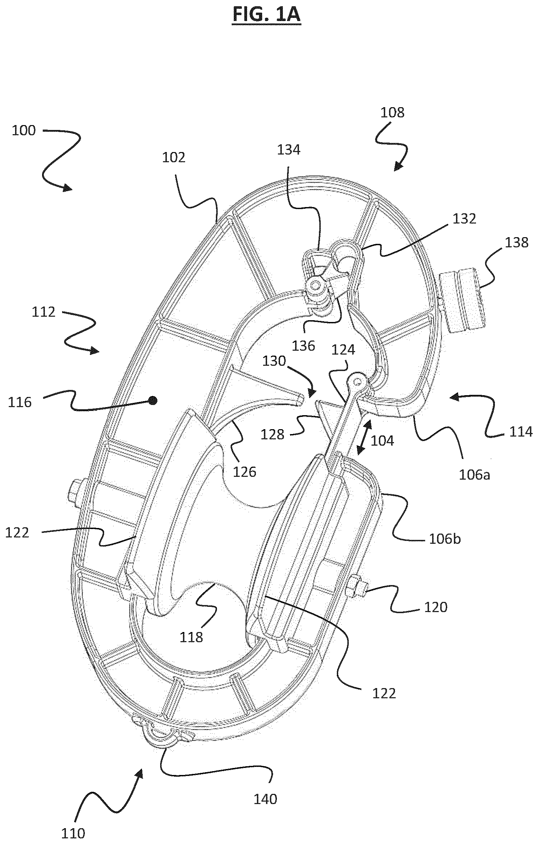

Figur 1A ist eine perspektivische Ansicht einer Girlandenrolle 100, der beispielsweise einen im Wesentlichen "C"-förmigen Körper 102 aufweist. Der Körper 102 weist eine Öffnung 104 zwischen einem Äußeren und einem Inneren des Körpers 102 auf. Die Öffnung 104 kann eine erste Öffnungsseite 106a und eine zweite Öffnungsseite 106b aufweisen, die einander gegenüberliegen und die Öffnung 104 flankieren können.

Der Körper 102 kann ein erstes Ende 108 und ein dem ersten Ende 108 gegenüberliegendes zweites Ende 110, eine linke Seite 112 und eine der linken Seite 112 gegenüberliegende rechte Seite 114 und eine Vorderseite 116 und eine der Vorderseite 116 gegenüberliegende Rückseite aufweisen.

Ferner kann die Girlandenrolle 100 eine Seilrolle 118 aufweisen, die drehbar auf einer Achse 120 montiert sein kann. Die Seilrolle 118 kann im Inneren des Körpers 102 angeordnet sein und sich durch das Innere des Körpers 102 von der linken Seite 112 zu der rechten Seite 114 erstrecken. Die Seilrolle 118 kann an einem Ende des Inneren näher am zweiten Ende 110 als am ersten Ende 108 angeordnet sein.

Die Girlandenrolle 100 kann einen Seilschutz 122 aufweisen, der sich von der Vorderseite 116 des Körpers 102 und teilweise über die Seilrolle 118 erstrecken kann.

Die Girlandenrolle 100 weist eine Hauptsperre 124 auf, die zwischen einer geschlossenen Stellung, in der sie die Öffnung 104 blockiert, und einer offenen Stellung, in der sie der Durchgang vom Äußeren zum Inneren durch die Öffnung 104 freigibt, bewegbar ist. In der offenen Stellung kann die Hauptsperre 124 weiter im Inneren angeordnet sein, als in der geschlossenen Stellung. In der Figur 1A ist die Hauptsperre 124 in ihrer geschlossenen Stellung dargestellt.

Die Hauptsperre 124 kann sich in ihrer geschlossenen Stellung über die Öffnung 104 erstrecken. Die Hauptsperre 124 kann als Teil eines Scharniers ausgebildet sein, wobei die Scharnierachse des Scharniers an einer der Öffnungsseiten 106a, 106b und insbesondere an der ersten Öffnungsseite 106a angebracht sein kann. Dies ermöglicht eine Schwenkbewegung der Hauptsperre 124 zwischen der offenen und der geschlossenen Stellung. Die Hauptsperre 124 kann beispielsweise als eine Klappe ausgebildet sein.

Die Girlandenrolle 100 kann einen Umlenkvorsprung 126 aufweisen, der im Inneren angeordnet ist. Der Umlenkvorsprung 126 kann sich seitlich von der linken Seite 112 in Richtung auf die rechte Seite 114 erstrecken. Der Umlenkvorsprung 126 kann zwischen der Seilrolle 118 und dem weiter von der Seilrolle entfernten Ende 108 angeordnet sein.

Alternativ oder zusätzlich zum Umlenkvorsprung 126 kann die Girlandenrolle 100 einen zweiten Umlenkvorsprung 128 aufweisen, der im Inneren angeordnet ist. Der zweite Umlenkvorsprung 128 kann beispielsweise auf einer in der geschlossenen Stellung der Hauptsperre 124 ins Innere weisenden Innenseite angeordnet sein und sich in Richtung auf die der Öffnung 104 gegenüberliegende linke Seite 112 des Körpers erstrecken.

Weist die Girlandenrolle 100 beide Umlenkvorsprünge 126, 128 auf, kann zwischen deren freien Enden eine Lücke 130 verbleiben. Die Lücke130 kann so bemessen sein, dass ein Tragseil durch die Lücke 130 hindurch bewegbar ist, jedoch nicht das kleinstmögliche Leiterseil.

Die Girlandenrolle kann eine Positioniervorrichtung für ein Tragseil aufweisen, mit der eine Sollposition für ein Tragseil vorgegeben ist. Die Lücke 130 kann zwischen der Seilrolle 118 und der Positioniervorrichtung angeordnet sein. Insbesondere kann die Positioniervorrichtung am ersten Ende 108 angeordnet sein.

Die Positioniervorrichtung kann eine Aussparung 132 zur Aufnahme eines Tragseils aufweisen. Der Querschnitt der Aussparung 132 kann dem Querschnitt des Tragseils im Wesentlichen entsprechen. Die Aussparung 132 kann sich ins Innere und beispielsweise in Richtung auf die Seilrolle 118 hin öffnen.

Die Positioniervorrichtung 132 kann einen Hohlraum 134 aufweisen, der sich an die Aussparung 132 anschließen und in diese übergehen kann, sodass der Hohlraum 134 und die Aussparung 132 ein gemeinsames, durchgängiges und freies Volumen bilden.

Die Positioniervorrichtung kann eine zweite Sperre 136 aufweisen, die zwischen einer Position, in der sie die Aussparung vom Inneren blockiert, und einer Position, in der sie die Aussparung zum Inneren freigegeben ist, bewegbar ist. Beispielsweise ist die zweite Sperre 136 Teil eines Scharniers, dessen Scharnierachse am Körper 102 angebracht sein kann. Insbesondere das Scharnier an einem Abschnitt des Körpers 102, der an einer Mündung der Aussparung 132, mit der sich die Aussparung 132 ins Innere öffnet, angrenzt, angebracht sein.

Wenn die zweite Sperre 136 die Aussparung zum Inneren freigibt, kann die zweite Sperre 136 zumindest teilweise im Hohlraum 134 angeordnet sein.

Die Girlandenrolle 100 kann ein womöglich zylindrisch ausgeformtes Gegengewicht 138 aufweisen. Das Gegengewicht 138 ist im dargestellten Ausführungsbeispiel beispielhaft an der rechten Seite 114 der Außenseite des Körpers 102 angeordnet dargestellt und dort angebracht. Insbesondere kann das Gegengewicht an einer Stelle zwischen der Öffnung 104 und dem Scheitelpunkt der Außenseite des ersten Endes 108 angeordnet sein.

Die Girlandenrolle 100 kann ein Anbringelement zum Anbringen eines Förderseils aufweisen. Das Anbringelement kann zumindest teilweise an der vom Inneren weg weisenden Außenseite des Körpers 102 angeordnet sein. Das Anbringelement kann eine Öse 140 aufweisen, die an der Außenseite angebracht ist. Insbesondere kann das Anbringelement am zweiten Ende 110 des Körpers 102 angeordnet sein. Die Öse 140 ermöglicht die Verbindung der Girlandenrolle 100 mit einer Förderleitung über einen lösbaren Verschluss, wie zum Beispiel ein Karabinerhaken.

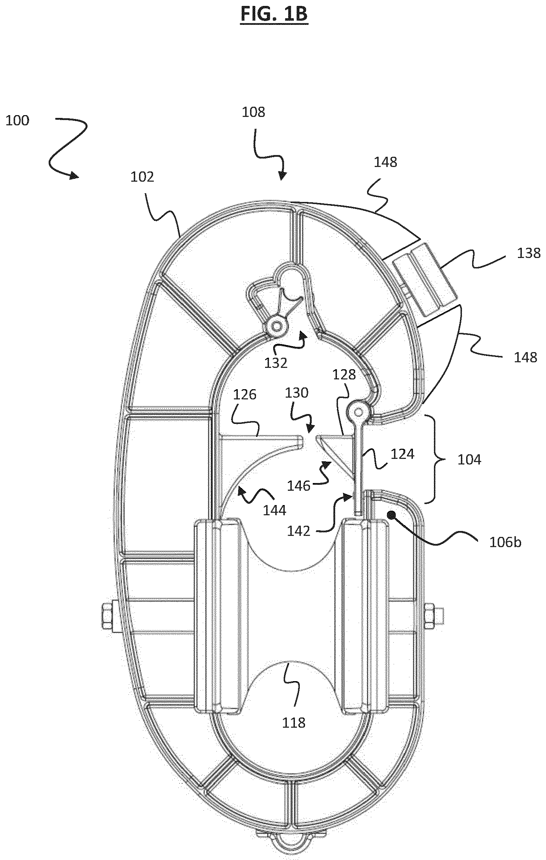

Figur 1B zeigt ein weiteres, nicht zur Erfindung gehörendes Ausführungsbeispiel. Der Kürze halber ist im Folgenden lediglich auf die Unterschiede zum Ausführungsbeispiel der Figur 1A eingegangen. Für Elemente, die in Form oder Funktion Elementen des bisherigen Ausführungsbeispiels entsprechen, sind dieselben Bezugszeichen verwendet.

Figur 1B zeigt die Girlandenrolle 100 so, dass seine Vorderseite 106b aus der Zeichenebene heraus weist. Das freie Ende der Hauptsperre 124 ragt in der gezeigten beispielhaften Darstellung über die Öffnung 104 hinaus, so dass die Hauptsperre 124 im geschlossenen Zustand auf der zweiten Öffnungsseite 106b anliegt. Die Hauptsperre 124 kann also eine sich von der Scharnierachse weg erstreckende Länge aufweisen, die größer ist, als die lichte Weite der Öffnung 104.

Die Girlandenrolle kann eine Lastübertragungseinrichtung aufweisen, die eine mechanische Last über die Öffnung 104 hinweg und beispielsweise von einem der Enden 106a, 106b zum anderen der Enden überträgt. Beispielsweise kann ein freies Ende der Hauptsperre 124 ein Halteelement und der Körper ein Gegenhalteelement aufweisen, wobei das Halteelement und das Gegenhalteelement im geschlossenen Zustand der Hauptsperre 124 mechanische Lasten vom Ende 106b in die Hauptsperre 124 einleiten. Die Hauptsperre 124 leitet die mechanischen Lasten in das andere Ende 106a. Die Girlandenrolle 100 kann eine Sperrklinke zwischen einem unverbundenen Ende der Hauptsperre 124 und dem Körper aufweisen, um den Ausgleich der Belastungskräfte durch die verwendete Körperseite zu unterstützen. Zum Beispiel kann die Sperrklinke einen Sperrvorsprung am Körper aufweisen, der von einer Sperrvertiefung der Öffnung 104 aufgenommen wird, oder umgekehrt.

Das Halteelement ist beispielsweise im Wesentlichen komplementär zum Gegenhalteelement ausgebildet. Das Gegenhalteelement ist in der Figur 1B beispielhaft als ein Haltevorsprung 142 dargestellt, der in das als eine Aufnahmeöffnung ausgebildete Halteelement eingreift. Der Haltevorsprung kann sich im Wesentlichen senkrecht zur Öffnung 124 und/oder parallel zur Drehachse der Seilrolle 118 erstrecken.

Der Umlenkvorsprung 126 und der zweite Umlenkvorsprung 128 können jeweils eine Umlenkfläche 144, 146 aufweisen, die der Seilrolle 118 zugewandt sein können. In ihrem Verlauf hin zum freien Ende des jeweiligen Umlenkvorsprungs 126, 128 können sich die Umlenkflächen zumindest abschnittsweise dem weiter von der Seilrolle 118 entfernten ersten Ende 108 des Körpers 102 annähern. Insbesondere kann die Umlenkfläche 144 des Umlenkvorsprungs 126 gekrümmt und beispielsweise konkav gekrümmt ausgeformt sein. Neben der Bereitstellung eines glatteren, also wenige oder keine Kanten oder Ecken aufweisenden Übergangsprofils für das Tragseil und/oder das Leiterseil, kann die zumindest eine Umlenkfläche 144, 146 eine im Wesentlichen trichterförmige Führung für das Tragseil bereitstellen. Weist die Girlandenrolle 100 nur einen Umlenkvorsprung 126, 128 auf, so kann die Umlenkfläche 144, 146 mit der ans Innere angrenzenden Innenseite des Körpers die trichterförmige Führung ausformen. Weist die Girlandenrolle 100 beide Umlenkvorsprünge 126, 128 auf, so können die Umlenkflächen 144, 146 gemeinsam die trichterförmige Führung ausformen.

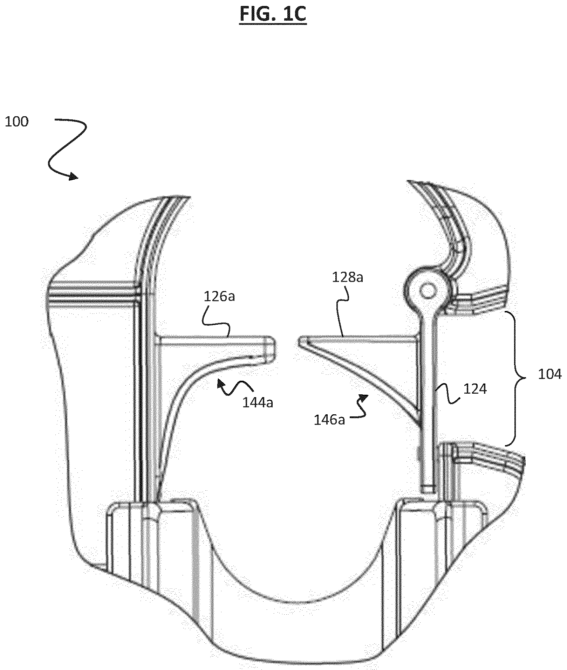

Figur 1C zeigt ein weiteres nicht zur Erfindung gehörendes Ausführungsbeispiel. Der Kürze halber ist im Folgenden lediglich auf die Unterschiede zu den bisherigen Ausführungsbeispielen eingegangen. Für Elemente, die in Form oder Funktion Elementen der bisherigen Ausführungsbeispiele entsprechen, sind dieselben Bezugszeichen verwendet.

Figur 1C zeigt eine beispielhafte Ausführung, bei der der Umlenkvorsprung (in Figur 1C mit 126a bezeichnet) und der zweite Umlenkvorsprung (in Figur 1C mit 128a bezeichnet) Umlenkflächen (144a bzw. 146a) aufweisen, die der Seilrolle 118 zugewandt und so geformt sind, dass ihr Scheitelpunkt zu einem vom Gegengewicht 138 entfernten Punkt verschoben ist. Die Scheitelpunkte sind also näher an der der Öffnung 104 gegenüberliegenden Seite des Körpers 102 angeordnet, als an der Öffnung 104. Dies kann dazu beitragen, dass bei Benutzung der Girlandenrolle 100 ein Schwenken oder Umkippen der Girlandenrolle100 reproduzierbarer stattfindet.

Mit Bezug auf Figur 1B ist ersichtlich, dass sich die das Tragseil positionierende Positioniervorrichtung und beispielsweise deren Aussparung 132 am Scheitelpunkt der Innenseite des Körpers 102 befinden kann. Abschnitte der Innenseite des Körpers, die an die Positioniervorrichtung angrenzen, führen das Tragseil zur Positioniervorrichtung und beispielsweise zu deren Aussparung 132, nachdem das Tragseil die Lücke 130 passiert hat.

In einer beispielhaften und in der Figur 1B gezeigten weitergebildeten Ausführung der erfindungsgemäßen Girlandenrolle100, ist an der Außenseite des Körpers 102 eine Ummantelung 148 für das Gegengewicht 138 vorgesehen. Die Ummantelung 148 kann mit der Außenseite ein im Wesentlichen kontinuierliches Profil bilden. Die Außenseite des Körpers 102 und die Außenseite der Ummantelung 148 können also im Wesentlichen übergangslos oder ohne Kanten ineinander übergehen. Die durch die Außenseite des Körpers 102 und die Außenseite der Ummantelung 148 gebildeten Außenseite der Girlandenrolle 100 kann also zumindest im Bereich des Übergangs von der Außenseite des Körpers 102 zu der Außenseite der Ummantelung 148frei von Stufen oder Kanten sein.

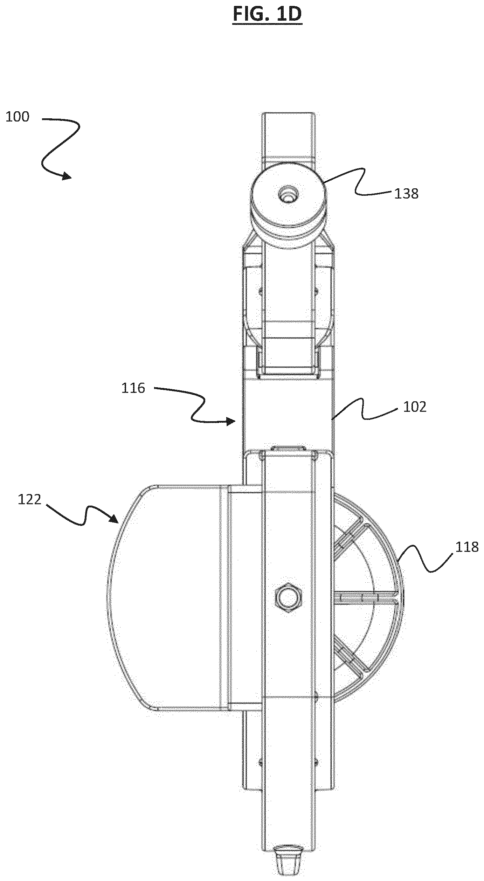

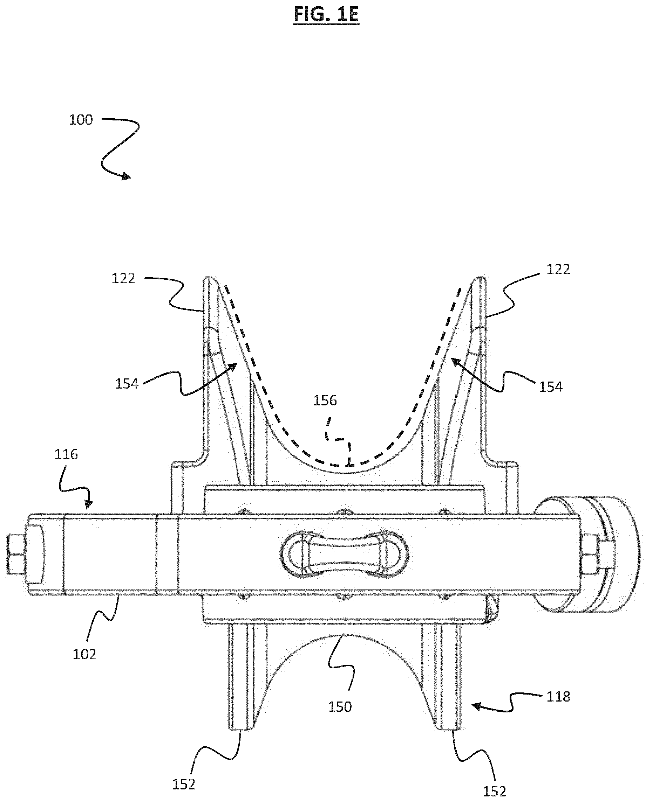

Figuren 1D und 1E zeigen die Girlandenrolle 100 eines der vorherigen Ausführungsbeispiele von der rechten Seite 114, auf der das Gegengewicht 138 angeordnet ist. Der Seilschutz 122 erstreckt sich von der Vorderseite 116 des Körpers 102 über die Seilrolle 118 hinaus.

Wie in Figur 1E zu sehen ist, kann die Seilrolle 118 eine Rille 150 zwischen den flankierenden Laufflächen 152 aufweisen. Der Seilschutz 122 kann sich über die Laufflächen 152 hinaus erstrecken, um zu verhindern, dass ein womöglich zwischen der Seilrolle 118 und dem Körper 102 vorhandener Spalt freigelegt ist. Innenflächen 154 der Seilrolle 122 können so geformt sein, dass sie die Laufflächen 152 in ihrem Verlauf fortsetzen. Die Innenflächen 154 und die Laufflächen 152 können also ein im Wesentlichen kontinuierliches Profil 156 mit der Rille 150 der Seilrolle 118 ausbilden.

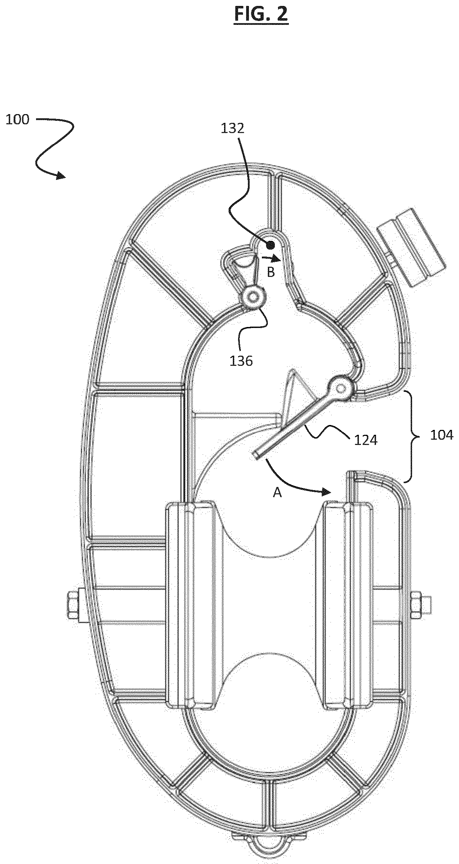

Figur 2 zeigt die Girlandenrolle 100 eines der vorherigen Ausführungsbeispiele in einer Seitenansicht.

Figur 2 zeigt die Hauptsperre 124 und die zweite Sperre 136 in ihrer jeweils geöffneten Position.

Die Hauptsperre 124 und die zweite Sperre 136 können in Richtung auf ihre geschlossene Stellung hin vorgespannt sein, beispielswiese durch Torsionsfedern. Die Richtung der Vorspannung ist in Figur 2 mit den Bezugszeichen A und B gekennzeichnet.

Dies kann ermöglichen, dass ein Benutzer der Girlandenrolle 100 weder die Hauptsperre 124 noch die zweite Sperre 136 manuell betätigen muss.

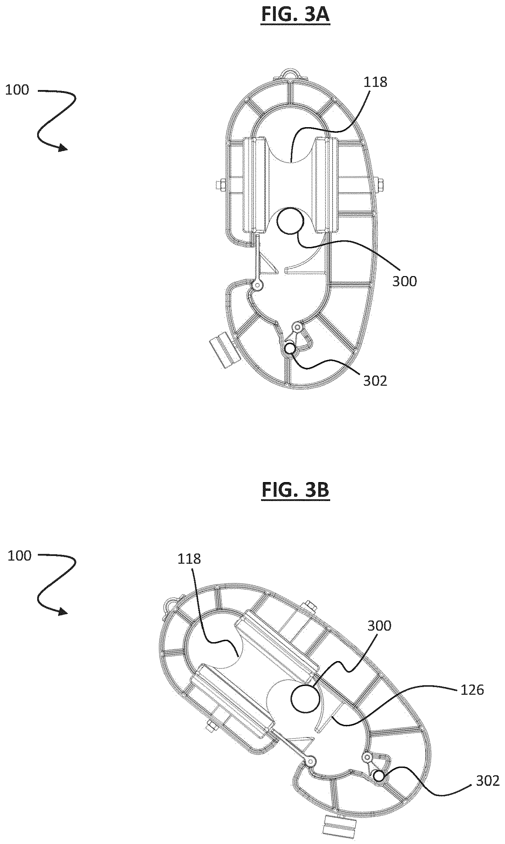

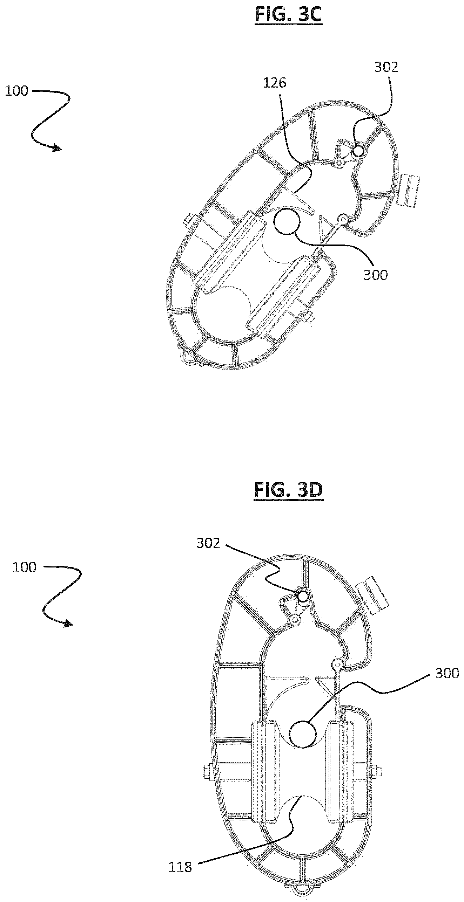

Figuren 3A bis Figur 3D zeigt die Bewegung der Girlandenrolle 100 eines der vorherigen Ausführungsbeispiele relativ zu einem bestehenden Leiterseils 300 und eines Tragseils 302.

In Figur 3A hängt die Girlandenrolle 100 mit seiner Seilrolle 118 am Leiterseil300. Das Tragseils 302 kann zu diesem Zeitpunkt schlaff sein. Beim Spannen des Tragseils 302 kann der Girlandenrolle 100 um das Leiterseil300 herumschwenken oder -kippen. Dabei kann das Leiterseil300 von der Seilrolle 118 auf den Umlenkvorsprung 126 gleiten, wie es in den Figuren 3B und 3C dargestellt ist. Sobald das Tragseil 302 gespannt ist, kann es zumindest einen Teil der Last des Leiterseil300, das nun auf der Seilrolle 118 ruhen kann, tragen.

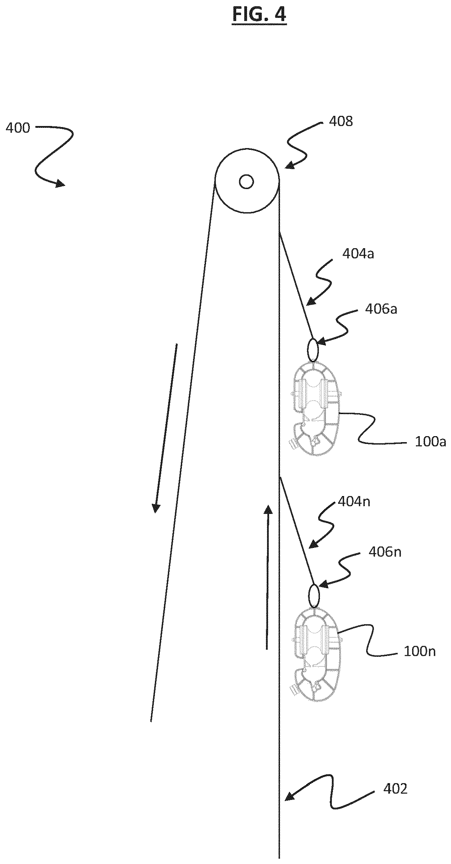

Figur 4 zeigt ein Förderseilsystem 400, mit dem beispielhaft mehrere der erfindungsgemäßen Girlandenrollen 100a-n in eine Arbeitsposition gehoben werden können. In der Arbeitsposition, die in der Regel in großer Höhe angeordnet ist, wenn beispielsweise als Leiterseil ein Überlandseil getauscht werden soll, können die Girlandenrollen 100a-n an dem Tragseil und/oder dem Leiterseilbefestigt werden (nicht inFigur4 dargestellt).

Das Förderseilsystem 400 kann ein Hauptseil 402 und mehrere Nebenseile 404a-n aufweisen. Jedes der Nebenseile 404a-n kann mit einem ihrer Enden an dem Hauptseil 402 befestigt sein, wobei die Nebenseile 404a-n vorzugsweise zueinander beabstandet an dem Hauptseil 402 befestigt sind. Die Girlandenrollen 100a-n können an den freien Enden der Nebenseile 404a-n, beispielsweise mit Karabinerhaken 406a-n und/oder durch Ösen 140, befestigt werden.

Das Hauptseil 402 kann über eine oder mehrere Umlenkrollen 408 geführt werden, um das Anheben der Girlandenrollen 100a-n in die Arbeitsposition zu erleichtern.

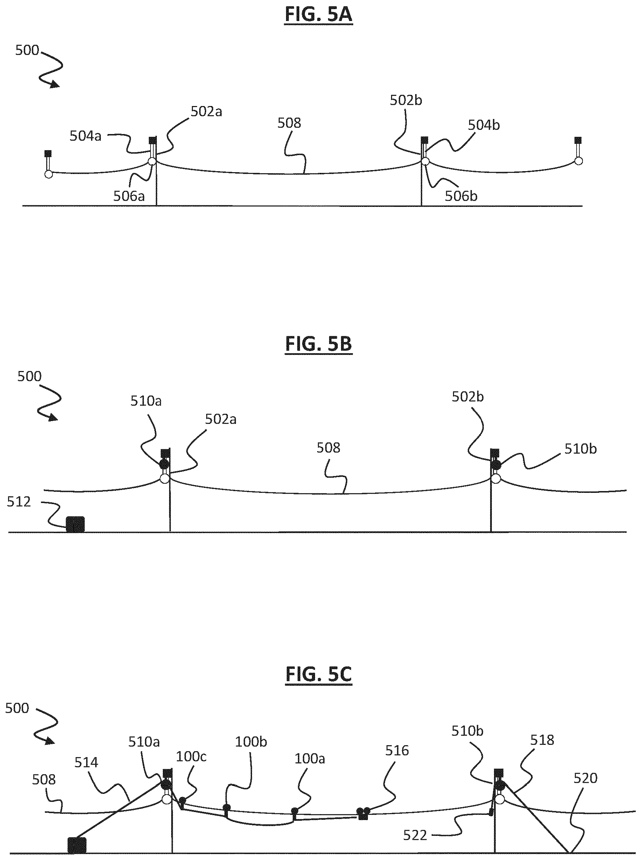

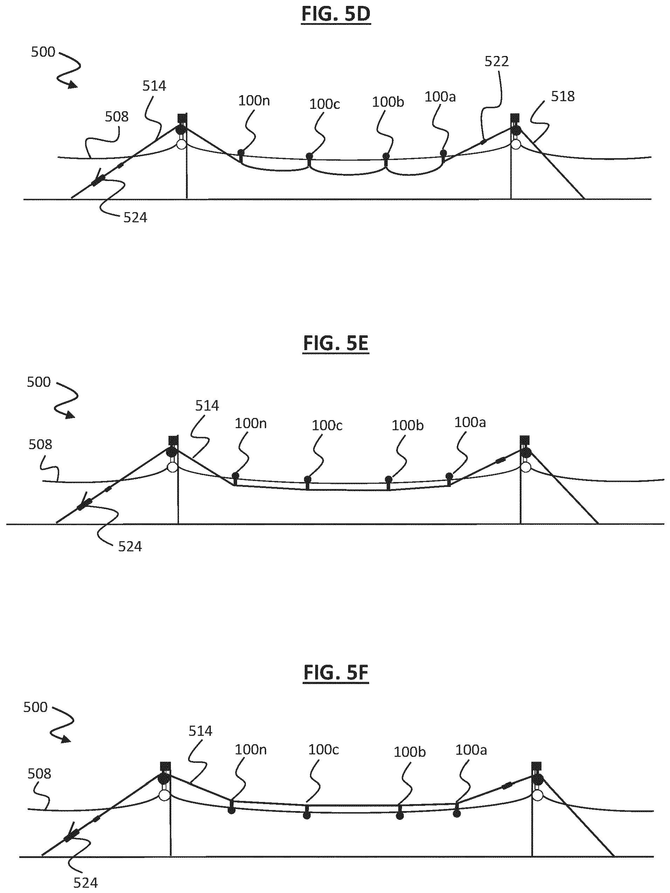

Figuren 5A-5L zeigen ein Leiterseil, etwa ein Freileitungseil, das beispielhaft als eine Hochspannungs-Stromübertragungsleitung 500 ausgeformt sein kann, in verschiedenen Stadien der Installation, und die Verwendung eines erfindungsgemäßen Freileitungshilfstragsystems, bei dem eine Vielzahl von erfindungsgemäßen Girlandenrollen 100 verwendet wird.

In der Figur 5A hängt die Hochspannungsleitung 500 zwischen zwei Tragkonstruktionen, die als Masten - einschließlich des ersten Mastes 502a und des zweiten Mastes 502b - dargestellt sind. Die Masten weisen jeweils eine Isolatorbaugruppe (Kette) 504 auf, die ein Seillaufrad 506 trägt, an der das vorhandenes Leiterseil 508 aufgehängt ist.

Im ersten Schritt der Installation des Freileitungshilfstragsystems können die Girlandenrollen 510 an einem den Masten 502b und/oder an einem Tragkabelcontainer am Boden angeordnet werden. Insbesondere kann eine Tragseiltrommel 512 auf einer von dem Masten 502b abgewandten Seite des ersten Mastes 502a aufgestellt werden.

Wie in Figur 5C zu sehen ist, kann ein Tragseil, das hier mit dem Bezugszeichen 514 versehen ist, über eine erste Laufrad 510a geführt und an einem Zugroboter 516 befestigt werden. Der Zugroboter 516 kann dabei bereits auf dem vorhandenen Leiterseil 508 positioniert sein. Die Girlandenrollen 100 werden auf das Niveau des vorhandenen Leiterseils 508 gehoben - zum Beispiel mit dem Förderseilsystem 400 des in der Figur gezeigten Ausführungsbeispiels - und an dem vorhandenen Leiterseil 508 und dem Tragseil 514 befestigt werden.

Ein Ankerseil 518 kann beispielsweise mit einem Bodenanker 520 am Boden befestigt sein und über ein Laufrad 510b geführt werden. Das Ankerseil 518 kann beispielsweise mit einem Schäkel 522 am Tragseil 514 befestigt sein.

Nachdem das Tragseil 514 ausgefahren und an der Ankerleine 518 befestigt worden ist, kann das Tragseil 514 mit einem Hebezeug 524 - zum Beispiel einem TIRFORO Hebezeug, das von der TRACTEL-Gruppe geliefert wurde - verbunden werden, wie in Figur 5D dargestellt.

Das Tragseil 514 kann dann mit dem Hebezeug 524 gespannt werden, bis das vorhandene Leiterseil 508 von den Girlandenrollen 100a-n, wie in Figur 5F zu sehen, getragen wird. Figur 3A-D veranschaulichen den Bewegungsbereich der Girlandenrollen 100a-n durch diesen Spannvorgang.

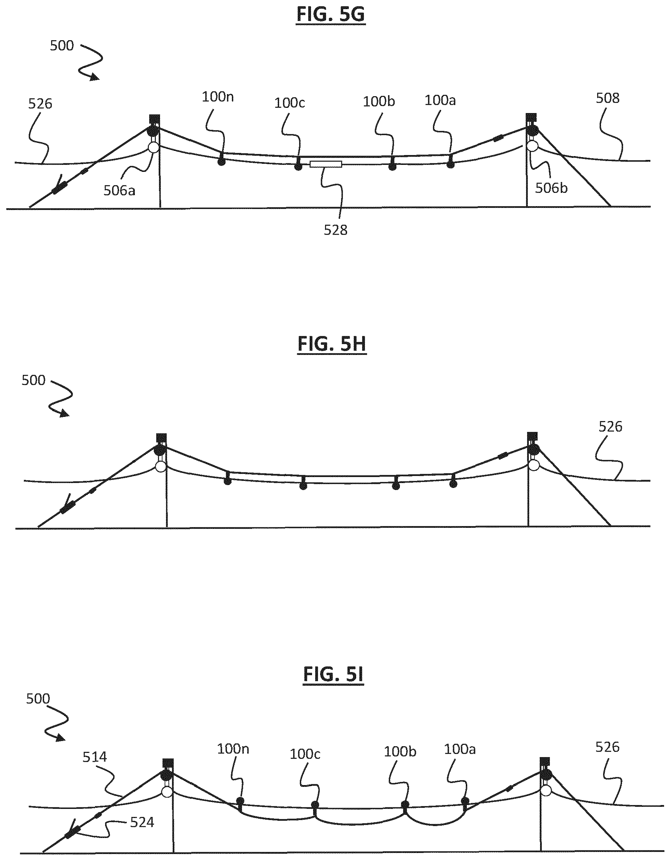

Das vorhandene Leiterseil 508 kann nun durch die Seillaufräder 506a und 506b gezogen werden. Vorab kann ein anderes Leiterseil 526, welches das vorhandene Leiterseil 508 ersetzen soll, am vorhandenen Leiterseil 508 angebracht werden, etwa mit einem Leiterverbinder 528. Somit kann das andere Leiterseil 526 dem vorhandenen Leiterseil 508 durch die Girlandenrollen 100a-n folgen - wie in Figur 5G zu sehen. Sobald das andere Leiterseil 526 durchgezogen ist - wie in Figur 5H zu sehen - kann es befestigt werden.

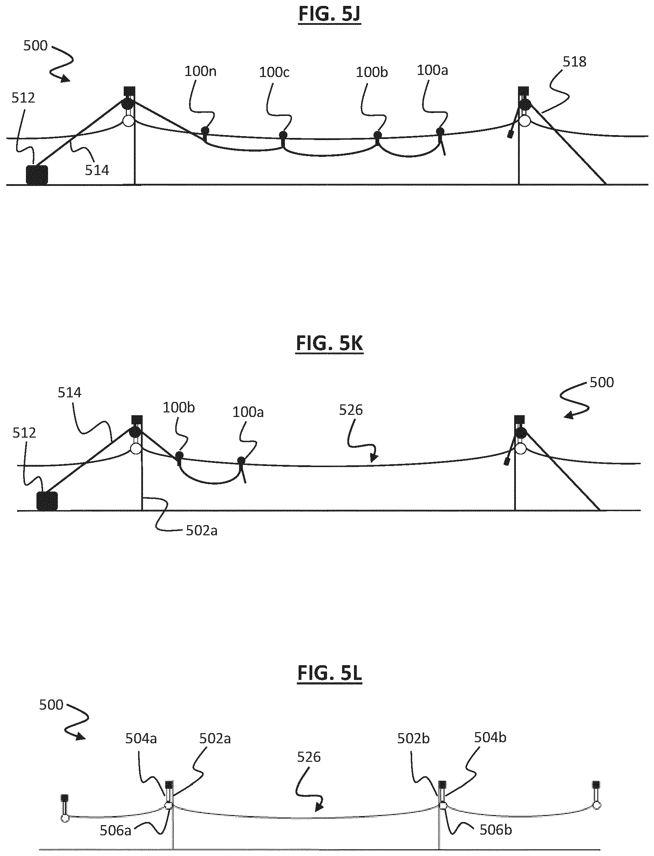

Das Freileitungshilfstragsystems kann dann wieder demontiert werden, etwa indem die Spannung im Tragseils 514 mit dem Hebezeug 524 gelöst wird, sodass die Girlandenrollen 100a-100n am andere Leiterseil 526 hängen, wie in Figur 5I dargestellt. Das Tragseil 514 wird dann von der Ankerleine 518 gelöst und das Hebezeug 524 vom Tragseil 514 getrennt, um mit der Tragseiltrommel512 geborgen zu werden, wie in Figur 5J zu sehen ist.

Bei der Bergung des Tragseils 514 können die Girlandenrollen 100a-100n zunächst von dem anderen Leiterseil 526 und dem Tragseil entfernt werden, wie in Figur 5K dargestellt. Sobald die Girlandenrollen 510a und 510b, das Tragseil 514 und die Ankerleine 518 entfernt sind, kann das anderen Leiterseil 526 vollständig in der Hochspannungsleitung 500 installiert werden, wie in Figur 5L zu sehen ist.

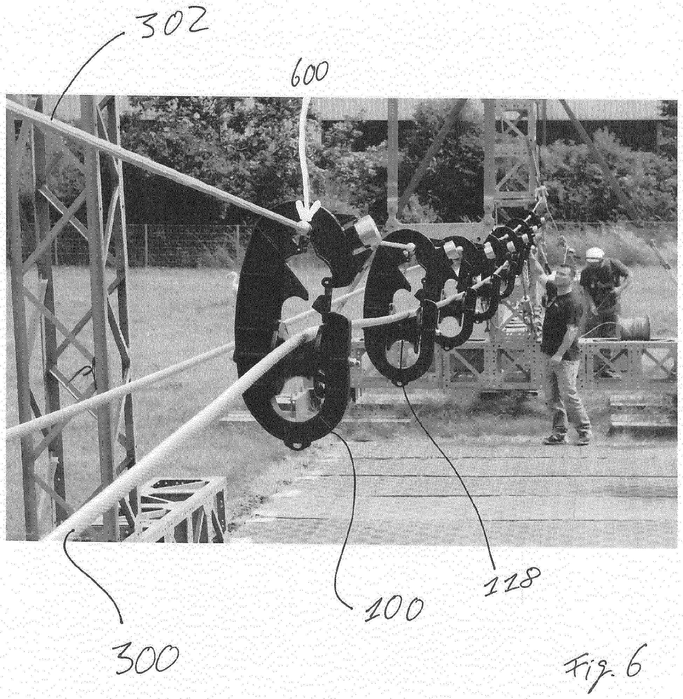

Figur 6 zeigt das vorherige Ausführungsbeispiel des erfindungsgemäßen Freileitungshilfstragsystems in einem Demonstrationsaufbau und mit mehreren Girlandenrollen 100 zumindest eines der vorherigen Ausführungsbeispiele. Die Girlandenrollen 100 hängen entlang des Tragseils 302 voneinander beabstandet am Tragseil 302, sodass das Leiterseil 300 auf jeweils einer der Seilrollen 118 aufliegt.

Um ein Gleiten oder Verrutschen der Girlandenrollen 100 auf dem Tragseil 302 zu verhindern, kann eine Positioniereinrichtung vorgesehen sein, die das Tragseil 302 kraftschlüssig hält und beispielsweise (Bezugszeichen in der Figur 6 der Übersichtlichkeit halber nicht dargestellt) zu verpressen.

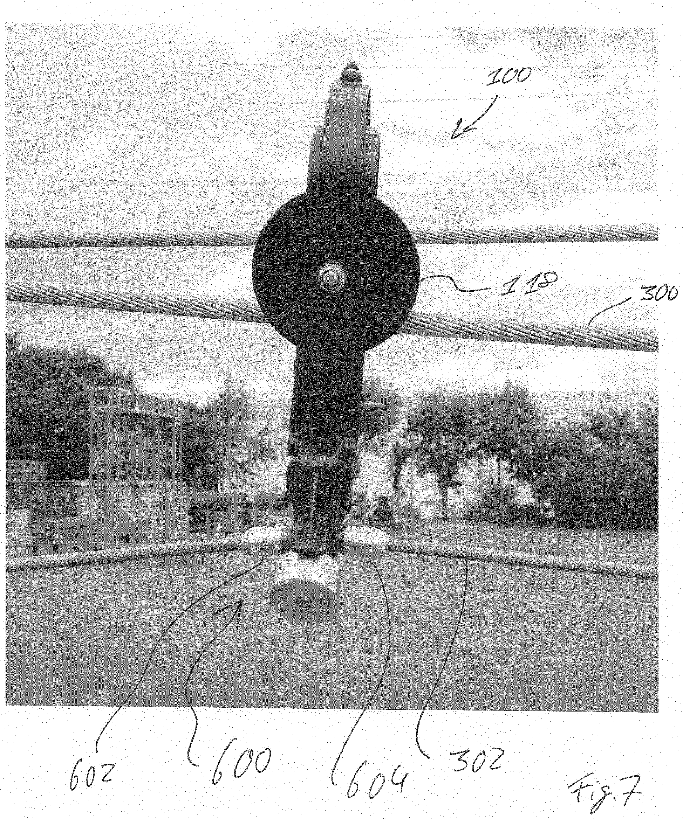

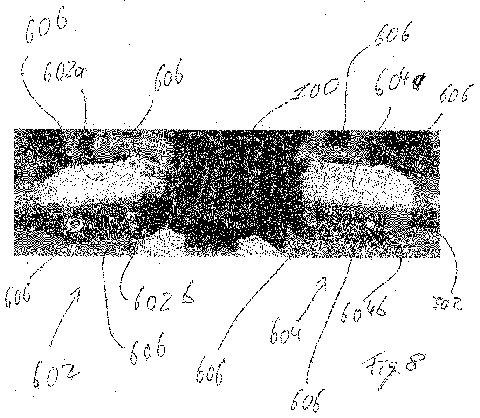

Figuren 7 und 8 zeigen das Ausführungsbeispiel der Figur 6 in einer Seitenansicht, wobei in der Figur 7 die Girlandenrollen 100 (Figur 7 zeigt nur einen der Girlandenrollen 100 der Figur 6) umgekippt dargestellt sind, sodass die Seilrolle 118 auf dem Leiterseil 300 aufliegt.

Die Fixiereinrichtung 600 des dargestellten Ausführungsbeispiels weist zwei Fixiereinrichtungen oder Bauteile 602, 604 auf, wobei die dargestellte Girlandenrolle 100 entlang des Tragseils 302 zwischen diesen Bauteilen 602, 604 angeordnet ist. Die Bauteile 602, 604 können unverschiebbar an dem Tragseil 302 angebracht werden, bevor das Tragseil 302 durch die Positioniervorrichtung positioniert wurde, oder danach. Die Bauteile 602, 604 können also separat von der Girlandenrolle 100 handhabbar bereitgestellt sein.

Die Bauteile 602, 604 können mehrteilig ausgebildet sein, wobei die Teile 602a, 602b, 604a, 604b der Bauteile 602, 604 von unterschiedlichen und beispielsweise einander gegenüberliegenden Seiten auf das Tragseil 302 einwirken können. Beispielsweise können die Teile 602a, 602b, 604a, 604b der Bauteile 602, 604 jeweils eine Hälfte eines der Bauteile 602, 604 bilden.

Die Bauteile 602, 604 können wenigstens eine Pressfläche enthalten, die das Tragseil 302 pressend kontaktiert, wenn die Fixiervorrichtung am Tragseil 302 angebracht ist. Eine Presskraft, die zwischen der Pressfläche und dem Tragseil 302 wirkt und ein Verschieben des Fixiervorrichtung entlang des Tragseils 302 verhindert, kann etwa einen Verriegelungshebel oder eine Vorspanneinrichtung wie eine Feder aufgebracht werden.

Die Teile 602a, 602b, 604a, 604b können form-, kraft- und/oder materialschlüssig aneinander befestigt sein. Die Befestigung kann die Presskraft aufbringen. Beispielsweise können die Teile 602a, 602b, 604a, 604b kraftschlüssig miteinander verschraubt sein. In der beispielhaften Darstellung der Figur 8 sind Schrauben 606 erkennbar, die eine Schraubverbindung zwischen den Teilen Teile 602a, 602b, 604a, 604b bereitstellen.

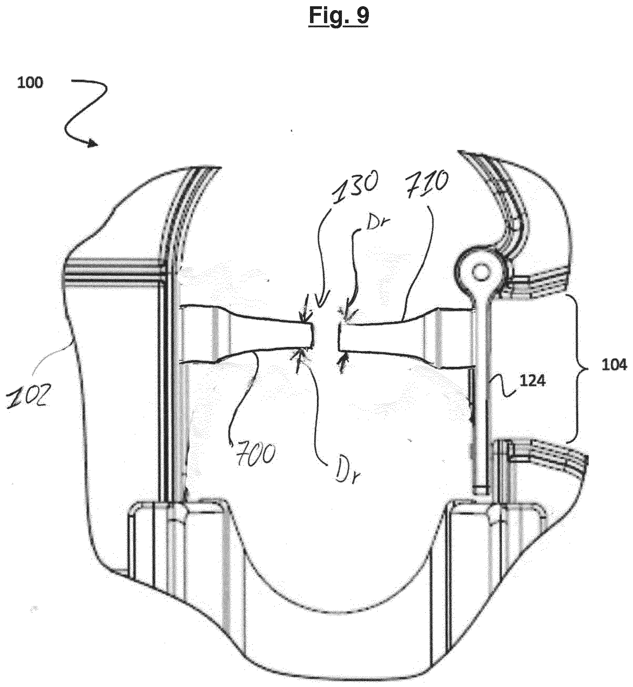

Figur 9 zeigt eine erfindungsgemäße Ausgestaltungsform der Girlandenrolle 100. Bei der Girlandenrolle 100 der beispielhaften Ausführungsform der Figur 8 sind die Umlenkvorsprünge jeweils durch eine Teilseilrolle 700, 710 ersetzt. Die Teilseilrollen 700, 710 können quer zu ihren Rollenachsen jeweils einen Rollendurchmesser Dr aufweisen. Entlang der Rollenachsen kann sich der Rollendurchmesser Dr zumindest abschnittsweise verringern. Die Teilseilrollen 700, 710 können sich in ihrem Verlauf also verjüngen. Die Teilseilrollen 700, 710 können ein freies Ende aufweisen, wobei sich der Rollendurchmesser Dr auf das freie Ende hin verringern kann. Das freie Ende der am Körper 102 angeordnete Teilseilrolle 700 kann zur Hauptsperre 124 weisen. Das freie Ende der an der Hauptsperre 124 angeordnete Teilseilrolle 710 kann zum der Hauptsperre 124 gegenüberliegenden Abschnitts des Körpers 102 weisen. Zwischen freien Enden der Teilseilrollen 700, 710 kann die Lücke 130 ausgebildet sein. Die beiden Teilseilrollen 700, 710 können so ausgebildet sein, dass deren Rollendurchmesser Dr an deren freien Enden jeweils sein Minimum erreicht.

Zumindest an ihren freien Enden können die Teilseilrollen 700, 710 identische oder unterschiedliche Rollendurchmesser Dr aufweisen. Die Rollenachsen können wenigstens wenn die Hauptsperre 124 in ihrer geschlossenen Position angeordnet ist, miteinander fluchtend, parallel zueinander, versetzt zueinander und/oder schräg zueinander verlaufend angeordnet sein. Die zwischen den freien Enden verbleibende Lücke 130 kann so bemessen sein, dass die an der Hauptsperre 124 angebrachte Teilseilrolle 710 an der anderen Teilseilrolle 700 vorbei schwenkbar ist, wenn die Hauptsperre 124 geöffnet wird. Alternativ oder zusätzlich können die Längen der Teilseilrollen 700, 710 und/oder deren Rollendurchmesser Dr (zumindest an den freien Enden) so bemessen sein, dass die an der Hauptsperre 124 angebrachte Teilseilrolle 710 an der anderen Teilseilrolle 700 vorbei schwenkbar ist, wenn die Hauptsperre 124 geöffnet wird.

## Patentansprüche

1. Girlandenrolle (100), mit:
einem Körper (102) mit einem Inneren und einem Äußeren, und mit einer Öffnung (104) zwischen dem Inneren und dem Äußeren;
einer Hauptsperre (124), die zwischen einer geschlossenen Stellung, in der die Öffnung (104) blockiert wird, und einer offenen Stellung, in der der Durchgang vom Äußeren zum Inneren durch die Öffnung (104) möglich ist, beweglich ist; und
einer im Inneren des Körpers (102) positionierte Seilrolle (118),
**dadurch gekennzeichnet, dass** die Girlandenrolle (100) eine erste Teilseilrolle (700) aufweist, die sich vom Körper (102) in das Innere erstreckt erstreckt,
wobei die erste Teilseilrolle (700) zwischen der Seilrolle (118) und einem von der Seilrolle (118) beabstandeten Ende (108) des Körpers (102) angeordnet ist , und wobei die Girlandenrolle (100) eine zweite Teilseilrolle (710) aufweist, die sich in der geschlossenen Position der Hauptsperre (124) in Richtung auf die erste Teilseilrolle erstreckt.

2. Girlandenrolle (100) nach Anspruch 1, wobei der Körper (102) eine Rückseite (112) mit einem ersten Ende (108) und einem zweiten Ende (110), einen ersten seitlichen Arm, der sich von dem ersten Ende (108) der Rückseite (112) erstreckt, und einen zweiten seitlichen Arm, der sich von dem zweiten Ende (110) der Rückseite (112) erstreckt, aufweist, wobei die Öffnung (104) zwischen freien Enden des ersten und des zweiten seitlichen Arms angeordnet ist.

3. Girlandenrolle (100) nach Anspruch 1 oder 2, wobei die Girlandenrolle (100) mindestens einen Seilschutz (122) aufweist, der zwischen dem Körper (102) und einem Längsende der Seilrolle (118) angebracht ist.

4. Girlandenrolle (100) nach einem der Ansprüche 1 bis 3, wobei die Öffnung (104) und die Hauptsperre (124) auf einer Seite des Körpers (102) zwischen der Position der Seilrolle (118) und einem von der Seilrolle (118) beabstandeten Ende (108) des Körpers (102) angeordnet sind.

5. Girlandenrolle (100) nach einem der Ansprüche 1 bis 4, wobei die Hauptsperre (124) so konfiguriert ist, dass sie in das Innere des Körpers zu öffnen ist.

6. Girlandenrolle (100) nach einem der Ansprüche 1 bis 5, wobei die Hauptsperre (124) in Richtung der geschlossenen Position vorgespannt ist.

7. Girlandenrolle (100) nach einem der Ansprüche 1 bis 6, wobei die Girlandenrolle (100) Mittel zur Positionierung eines Tragseils (302) in Bezug auf den Körper (102) aufweist.

8. Girlandenrolle (100) nach Anspruch 1, wobei eine der Seilrolle (118) zugewandte Fläche der Teilseilrolle (700) von der Seilrolle (118) zum beabstandeten Ende (108) des Körpers hin schräg verlaufend angeordnet ist.

9. Girlandenrolle (100) nach Anspruch 1, wobei eine der Seilrolle (118) zugewandte Fläche der Teilseilrolle (700) konkav gekrümmt ist.

10. Girlandenrolle (100) nach Anspruch 9, wobei die konkav gekrümmte Fläche der Teilseilrolle (700) so geformt ist, dass ihr Scheitelpunkt weg von der Hauptsperre (124) seitlich vom Massenschwerpunkt der Girlandenrolle (100) versetzt angeordnet ist.

11. Girlandenrolle (100) nach Anspruch 1, wobei eine Lücke (130) zwischen den Teilseilrollen (700, 710) verbleibt, die, wenn die Hauptsperre (124) geschlossen ist, ausreicht, um ein Tragseil (302) durch die Lücke (130) zu bewegen.

12. Girlandenrolle (100) nach einem der Ansprüche 1 bis 11, wobei der Girlandenrolle (100) ein Gegengewicht (138) aufweist.

13. Freileitungshilfstragsystem, aufweisend:
eine Mehrzahl von Girlandenrollen (100) nach einem der Ansprüche 1 bis 12; und
ein Tragseil (302) zur Aufhängung zwischen zwei Tragkonstruktionen, an denen die Girlandenrollen (100) befestigt sind.

14. Verfahren für den Einsatz eines Freileitungshilfstragsystems, bei dem eine Vielzahl von Girlandenrollen an einem Tragseil befestigt werden oder sind, wobei die Girlandenrollen die Girlandenrollen nach einem der Ansprüche 1 bis 12 sind.

## Claims

1. A garland roller (100), having:
a body (102) having an interior and an exterior, and having an opening (104) between the interior and the exterior;
a main locking device (124) which is movable between a closed position in which the opening (104) is blocked, and an open position in which the passage from the exterior to the interior is possible through the opening (104); and
a cable pulley (118) positioned in the interior of the body (102),
**characterized in that** the garland roller (100) has a first support cable pulley (700) which extends from the body (102) into the interior, wherein the first support cable pulley (700) is arranged between the cable pulley (118) and an end (108) of the body (102) which is spaced from the cable pulley (118),
and wherein the garland roller (100) has a second support cable pulley (710) which extends in the closed position of the main locking device (124) in the direction of the first support cable pulley.

2. The garland roller (100) according to Claim 1, wherein the body (102) has a back (112) having a first end (108) and a second end (110), a first lateral arm which extends from the first end (108) of the back (112), and a second lateral arm which extends from the second end (110) of the back (112), wherein the opening (104) is arranged between free ends of the first and of the second lateral arm.

3. The garland roller (100) according to Claim 1 or 2, wherein the garland roller (100) has at least one cable guard (122) which is mounted between the body (102) and a longitudinal end of the cable pulley (118).

4. The garland roller (100) according to any one of Claims 1 to 3, wherein the opening (104) and the main locking device (124) are arranged on one side of the body (102) between the position of the cable pulley (118) and an end (108) of the body (102), which is spaced from the cable pulley (118).

5. The garland roller (100) according to any one of Claims 1 to 4, wherein the main locking device (124) is configured such that it is to be opened into the interior of the body.

6. The garland roller (100) according to any one of Claims 1 to 5, wherein the main locking device (124) is prestressed in the direction of the closed position.

7. The garland roller (100) according to any one of Claims 1 to 6, wherein the garland roller (100) has means for positioning a support cable (302) in relation to the body (102).

8. The garland roller (100) according to Claim 1, wherein a face of the support cable pulley (700) facing the cable pulley (118) is arranged running obliquely from the cable pulley (118) to the spaced end (108) of the body.

9. The garland roller (100) according to Claim 1, wherein a face (700) of the cable pulley (118) has a concave curvature.

10. The garland roller (100) according to Claim 9, wherein the face of the support cable pulley (700) which has the concave curvature is formed so that its vertex is arranged laterally offset from the center of mass of the garland roller (100), away from the main locking device (124).

11. The garland roller (100) according to Claim 1, wherein a gap (130) remains between the support cable pulleys (700, 710) which, if the main locking device (124) is closed, is sufficient in order to move a support cable (302) through the gap (130).

12. **The** garland roller (100) according to any one of Claims 1 to 11, wherein the garland roller (100) has a counterweight (138).

13. An overhead line support system, having:
a plurality of garland rollers (100) according to any one of Claims 1 to 12; and
a support cable (302) for suspension between two supporting structures, to which the garland rollers (100) are fastened.

14. A method for the deployment of an overhead line support system, in which a plurality of garland rollers are or will be fastened to a support cable, wherein the garland rollers are the garland rollers according to any one of Claims 1 to 12.

## Revendications

1. Guirlande de rouleau (100), comportant :
un corps (102) comportant un intérieur et un extérieur, et une ouverture (104) entre l'intérieur et l'extérieur ;
un verrou principal (124) mobile entre une position de fermeture où l'ouverture (104) est obturée, et une position d'ouverture permettant le passage de l'extérieur vers l'intérieur par l'ouverture (104) ; et
une poulie de câble (118) disposé à l'intérieur du corps (102),
**caractérisé en ce que** la guirlande de rouleau (100) présente une première poulie de support (700) s'étendant du corps (102) vers l'intérieur, la première poulie de support (700) étant disposée entre la poulie de câble (118) et une extrémité (108) du corps (102) étant espacée de la poulie de câble (118),
et la guirlande de rouleau (100) présentant une deuxième poulie de support (710) s'étendant en direction de la première poulie de support en position de fermeture du verrou principal (124).

2. Guirlande de rouleau (100) selon la revendication 1, le corps (102) présentant une face arrière (112) avec une première extrémité (108) et une deuxième extrémité (110), un premier bras latéral s'étendant depuis la première extrémité (108) de la face arrière (112), et un deuxième bras latéral s'étendant depuis la deuxième extrémité (110) de la face arrière (112), l'ouverture (104) étant disposée entre les extrémités libres du premier et du deuxième bras latéral.

3. Guirlande de rouleau (100) selon la revendication 1 ou la revendication 2, la guirlande de rouleau (100) présentant au moins un protecteur de câble (122) monté entre le corps (102) et une extrémité longitudinale de la poulie de câble (118).

4. Guirlande de rouleau (100) selon l'une quelconque des revendications 1 à 3, l'ouverture (104) et le verrou principal (124) étant disposés sur un côté du corps (102) entre l'emplacement de la poulie de câble (118) et une extrémité (108) du corps (102) espacée de la poulie de câble (118).

5. Guirlande de rouleau (100) selon l'une quelconque des revendications 1 à 4, le verrou principal (124) étant conçu pour être ouvert vers l'intérieur du corps.

6. Guirlande de rouleau (100) selon l'une quelconque des revendications 1 à 5, le verrou principal (124) étant précontraint vers la position de fermeture.

7. Guirlande de rouleau (100) selon l'une quelconque des revendications 1 à 6, la guirlande de rouleau (100) présentant des moyens de positionnement d'un câble porteur (302) par rapport au corps (102).

8. Guirlande de rouleau (100) selon la revendication 1, une surface de la poulie de support (700) opposée à la poulie de câble (118) étant disposée obliquement depuis la poulie de câble (118) vers l'extrémité (108) espacée du corps.

9. Guirlande de rouleau (100) selon la revendication 1, une surface de la poulie de support (700) opposée à la poule de câble (118) présentant une courbure concave.

10. Guirlande de rouleau (100) selon la revendication 9, la surface de la poulie de support (700) avec la courbure concave étant formée de telle sorte que son sommet est décalé latéralement par rapport au centre de gravité de la guirlande de rouleau (100), à distance du verrou principal (124).

11. Guirlande de rouleau (100) selon la revendication 1, un espace (130) demeurant entre les poulies de support (700, 710), suffisant pour déplacer un câble porteur (302) à travers l'espace (130) lorsque le verrou principal (124) est fermé.

12. Guirlande de rouleau (100) selon l'une quelconque des revendications 1 à 11, la guirlande de rouleau (100) présentant un contrepoids (138).

13. Système auxiliaire de support de ligne aérienne, comportant :
une pluralité des guirlandes de rouleaux (100) selon l'une quelconque des revendications 1 à 12 ; et
un câble porteur (302) destiné à la suspension entre deux structures porteuses auxquelles sont fixés les guirlandes de rouleaux (100).

14. Procédé de mise en œuvre d'un système auxiliaire de support de ligne aérienne, dans lequel une pluralité des guirlandes de rouleaux sont fixés ou destinés à être fixés à un câble porteur, les guirlandes de rouleaux étant les guirlandes de rouleaux selon l'une quelconque des revendications 1 à 12.
